(19) Europäisches Patentamt European Patent Office Office européen des brevets

(11) **EP 3 813 442 B1**

(12) **EUROPEAN PATENT SPECIFICATION**

(45) Date of publication and mention of the grant of the patent:
**01.03.2023 Bulletin 2023/09**

(21) Application number: **19846956.1**

(22) Date of filing: **09.08.2019**

(51) International Patent Classification (IPC):
*H04W 52/02* (2009.01)   *H04W 68/02* (2009.01)
*H04W 72/04* (2009.01)   *H04L 5/00* (2006.01)
*H04B 7/06* (2006.01)

(52) Cooperative Patent Classification (CPC):
**H04B 7/0613; H04W 52/0216; H04W 52/0219; H04W 52/0229; H04W 68/02;** Y02D 30/70

(86) International application number:
**PCT/KR2019/010119**

(87) International publication number:
**WO 2020/032717 (13.02.2020 Gazette 2020/07)**

(54) **METHOD AND APPARATUS FOR RECEIVING SIGNAL IN WIRELESS COMMUNICATION SYSTEM**

VERFAHREN UND VORRICHTUNG ZUM EMPFANGEN EINES SIGNALS IN EINEM DRAHTLOSKOMMUNIKATIONSSYSTEM

PROCÉDÉ ET APPAREIL POUR LA RÉCEPTION DE SIGNAUX DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2018   KR 20180093425**
**17.08.2018   KR 20180096386**
**21.09.2018   KR 20180114500**
**09.11.2018   KR 20180137662**
**14.02.2019   KR 20190017268**

(43) Date of publication of application:
**28.04.2021   Bulletin 2021/17**

(73) Proprietor: **LG Electronics, Inc.**
**Yeongdeungpo-gu**
**Seoul 07336 (KR)**

(72) Inventors:
• **HWANG, Seunggye**
**Seoul 06772 (KR)**
• **PARK, Changhwan**
**Seoul 06772 (KR)**
• **AHN, Joonkui**
**Seoul 06772 (KR)**

(74) Representative: **Maikowski & Ninnemann Patentanwälte Partnerschaft mbB**
**Postfach 15 09 20**
**10671 Berlin (DE)**

(56) References cited:
**KR-A- 20180 020 168     US-A1- 2015 092 741**

• **QUALCOMM INCORPORATED: "Detailed design for Wake-up signal sequence", 3GPP DRAFT; R1-1807109_WUS SEQUENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051442307, Retrieved from the Internet: URL:http://www.3gpp.org/ftp/Meetings%5F3GP P%5FSYNC/RAN1/Docs/ [retrieved on 2018-05-20]**

- SAMSUNG: "Wake Up Signal Design", 3GPP DRAFT; R1-1804331 NB-IOT WAKE UP SIGNAL DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 6 April 2018 (2018-04-06), XP051413232, Retrieved from the Internet: URL:http://www.3gpp.org/ftp/tsg%5Fran/WG1%5FRL1/TSGR1%5F92b/Docs/ [retrieved on 2018-04-06]
- HUAWEI ET AL: "Feature lead summary on detailed design of Wake-up signal in NB-IoT", 3GPP DRAFT; R1-1803006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 28 February 2018 (2018-02-28), XP051398493, Retrieved from the Internet: URL:http://www.3gpp.org/ftp/tsg%5Fran/WG1%5FRL1/TSGR1%5F92/Docs/ [retrieved on 2018-02-28]
- HUAWEI ET AL: "Updated feature lead summary on NB-IoT Rel-15 NWUS maintenance", 3GPP DRAFT; R1-1809662, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20180820 - 20180824 23 August 2018 (2018-08-23), XP051517022, Retrieved from the Internet: URL:http://www.3gpp.org/ftp/tsg%5Fran/WG1%5FRL1/TSGR1%5F94/Docs/R1%2D1809662%2Ezip [retrieved on 2018-08-23]
- QUALCOMM INCORPORATED: "Remaining issues on WUS configurations and procedures", R1-1807108, 3GPP TSG RAN WG1 Meeting #93, 12 May 2018 (2018-05-12), XP051462922, Busan, Korea
- QUALCOMM INCORPORATED: "Detailed design for Wake-up signal sequence", R1-1807109, 3GPP TSG RAN WG1 Meeting #93, 12 May 2018 (2018-05-12), XP051462923, Busan, Korea
- LG ELECTRONICS: "Discussion on wake up signal configurations and procedures in NB-IoT", R1-1806589, 3GPP TSG RAN WG1 Meeting #93, 12 May 2018 (2018-05-12), XP051462629, Busan, Korea

**Description**

## TECHNICAL FIELD

The present disclosure relates to a method and apparatus used in a wireless communication system, and more particularly, to a method and apparatus for receiving a paging signal.

## BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of CDMA (code division multiple access) system, FDMA (frequency division multiple access) system, TDMA (time division multiple access) system, OFDMA (orthogonal frequency division multiple access) system, SC-FDMA (single carrier frequency division multiple access) system and the like.

Examples, of prior art wireless communication systems are described in:

QUALCOMM INCORPORATED: "Detailed design for Wake-up signal sequence", 3GPP DRAFT; R1-1807109 WUS SEQUENCE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Busan, Korea; 20180521 - 20180525 20 May 2018 (2018-05-20);

SAMSUNG: "Wake Up Signal Design", 3GPP DRAFT; R1-1804331 NB-IOT WAKE UP SIGNAL DESIGN, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Sanya, China; 20180416- 20180420 6 April 2018 (2018-04-06); and

HUAWEI ET AL: "Feature lead summary on detailed design of Wake-up signal in NB-IoT", 3GPP DRAFT; R1-1803006, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Athens, Greece; 20180226- 20180302 28 February 2018 (2018-02-28).

## DETAILED DESCRIPTION OF DISCLOSURE

### TECHNICAL TASK

One technical task of the present disclosure is to provide a signal receiving method for efficiently performing WUS reception in a wireless communication system and apparatus therefor.

Technical tasks obtainable from the present disclosure are non-limited by the above-mentioned technical task. And, other unmentioned technical tasks can be clearly understood from the following description by those having ordinary skill in the technical field to which the present disclosure pertains.

### TECHNICAL SOLUTIONS

The subject-matter of the claims is presented. The present disclosure provides a signal receiving method and apparatus in a wireless communication system.

In one example of the present disclosure, provided herein is a method of receiving a signal by a first communication device in a wireless communication system, the method including receiving a Wake-Up Signal (WUS) based on a first antenna port assumption structure and monitoring a paging signal in one or more Paging Occasions (POs) based on the WUS, wherein the first antenna port assumption structure may include a pattern structure of time intervals in which the first communication device assumes a same antenna port for the WUS and wherein the first antenna port assumption structure may be used by a first subgroup to which the first communication device belongs and configured different from a second antenna port assumption structure used by a second subgroup to which a second communication device belongs.

In another example of the present disclosure, provided herein is a communication device for transceiving signals in a wireless communication system, the communication device including at least one transceiver, at least one processor, and at least one memory connected to the at least one processor operatively and storing instructions instructing the at

3

least one processor to perform a specific operation if executed, wherein the specific operation may include receiving a Wake-Up Signal (WUS) based on a first antenna port assumption structure and monitoring a paging signal in one or more Paging Occasions (POs) based on the WUS, wherein the first antenna port assumption structure may include a pattern structure of time intervals in which a first communication device assumes a same antenna port for the WUS, and wherein the first antenna port assumption structure may be used by a first subgroup to which the first communication device belongs and configured different from a second antenna port assumption structure used by a second subgroup to which a second communication device belongs.

According to the method or device, the one or more POs may be configured for one group including the first subgroup and the second subgroup.

According to the method or device, the pattern structure may include one of a first pattern structure for assuming a same antenna port for two consecutive time intervals other than an initial time interval, in which the WUS is transmitted, a second pattern structure for assuming a same antenna port for first and third time intervals among four consecutive time intervals, the second pattern structure assuming a same antenna port for second and fourth time intervals among the four consecutive time intervals, or a third pattern structure for assuming a same antenna port for first and fourth time intervals among four consecutive time intervals, the third pattern structure assuming a same antenna port for second and third time intervals among the four consecutive time intervals.

According to the method or device, the WUS for the first subgroup may be transmitted through an antenna port matching the first antenna port assumption structure.

According to the method or device, the WUS for the first subgroup and the WUS for the second subgroup may be used by a third communication device which belongs to the one group and does not support subgroup classification.

According to the method or device, the first subgroup and the second subgroup may be classified by using a first cover code for the first subgroup and a second cover code for the second subgroup, respectively.

According to the method or device, the first cover code and the second cover code may be in orthogonal relationship, a third cover code may be used for all communication devices belonging to the one group, and a fourth cover code may be used for a third communication device which belongs to the one group and does not support subgroup classification..

According to the method or device, the communication device may include at least one of a user equipment, a network, or an autonomous vehicle capable of communicating with other autonomous vehicles different from the communication device.

## ADVANTAGEOUS EFFECTS

According to one embodiment of the present disclosure, when WUS reception is performed by a communication device, more efficient WUS reception can be advantageously performed through an operation differentiated from the related art.

Effects obtainable from the present invention are non-limited by the above-mentioned effect. And, other unmentioned effects can be clearly understood from the following description by those having ordinary skill in the technical field to which the present invention pertains.

## DESCRIPTION OF DRAWINGS

FIG. 1 illustrates physical channels used in 3rd generation partnership project (3GPP) long term evolution(-advanced) (LTE(-A)) and a signal transmission method using the same.

FIG. 2 illustrates an LTE radio frame structure.

FIG. 3 illustrates a resource grid of a downlink slot.

FIG. 4 illustrates a downlink subframe structure.

FIG. 5 illustrates the structure of an uplink subframe used in LTE(-A).

FIG. 6 illustrates physical channels used in a 3GPP LTE(-A)) system and a general signal transmission method using the same.

FIG. 7 illustrates a structure of an NR radio frame.

FIG. 8 illustrates a resource grid of a slot.

FIG. 9 illustrates a structure of a self-contained subframe.

FIG. 10 illustrates arrangement of an in-band anchor carrier in an LTE bandwidth of 10MHz.

FIG. 11 illustrates positions at which NB-IoT downlink physical channels/signals are transmitted in an FDD LTE system.

FIG. 12 illustrates resource allocation for an NB-IoT signal and an LTE signal in an in-band mode.

EP 3 813 442 B1

FIG. 13 illustrates scheduling in case of multi-carrier configuration.
FIG. 14 illustrates Wake-Up Signal (WUS) transmission.
FIG. 15 illustrates an antenna port assumption structure according to an embodiment of the present disclosure.
FIG. 16 illustrates application of a cover code per UE subgroup according to an embodiment of the present disclosure.
FIG. 17 is a flowchart according to an embodiment of the present disclosure.
FIGs. 18 to 25 illustrate UE subgrouping methods according to an embodiment of the present disclosure.
FIGs. 26 to 29 illustrate devices according to an embodiment of the present disclosure.

## BEST MODE FOR DISCLOSURE

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is a part of Evolved UMTS (E-UMTS) using E-UTRA, employing OFDMA for downlink (DL) and SC-FDMA for uplink (UL). LTE-Advanced (LTE-A) / LTE-A Pro evolve from 3GPP LTE. New Radio (NR) or New Radio Access Technology(New RAT) is further evolves from 3GPP LTE/LTE-A/LTE-A pro.

The LTE refers to the technology beyond 3GPP technical specification (TS) 36.xxx Release 8. In particular, the LTE technology beyond 3GPP TS 36.xxx Release 10 is referred to as the LTE-A, and the LTE technology beyond 3GPP TS 36.xxx Release 13 is referred to as the LTE-A pro. The 3GPP NR refers to the technology beyond 3GPP TS 38.xxx Release 15. The LTE/NR may be called '3GPP system'. Herein, "xxx" refers to a standard specification number. The LTE/NR may be commonly referred to as '3GPP system'. Details of the background, terminology, abbreviations, etc. used herein may be found in documents published before the present disclosure. For example, the following documents may be referenced.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

## 1. LTE(-A) System

In a wireless communication system, a user equipment (UE) receives information through DL from a base station (BS) and transmit information to the BS through UL. The information transmitted and received by the BS and the UE includes data and various control information and includes various physical channels according to type/usage of the information transmitted and received by the UE and the BS.

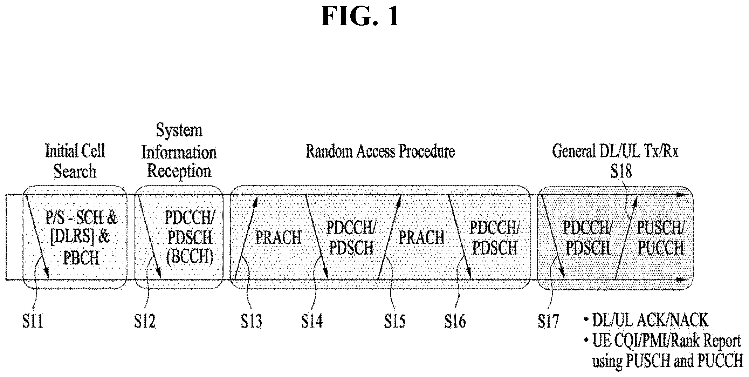

FIG. 1 illustrates physical channels can be used in embodiments of the present invention and a signal transmission method using the same.

When powered on or when a UE initially enters a cell, the UE performs initial cell search involving synchronization with a BS in step S11. For initial cell search, the UE synchronizes with the BS and acquire information such as a cell Identifier (ID) by receiving a primary synchronization channel (P-SCH) and a secondary synchronization channel (S-SCH) from the BS.

Then the UE may receive broadcast information from the cell on a physical broadcast channel (PBCH).

In the meantime, the UE may check a DL channel status by receiving a DL reference signal (RS) during initial cell search.

After initial cell search, the UE may acquire more specific system information by receiving a physical downlink control channel (PDCCH) and receiving a physical downlink shared channel (PDSCH) based on information of the PDCCH in step S12.

The UE may perform a random access procedure to access the BS in steps S13 to S16. For random access, the UE may transmit a preamble to the BS on a physical random access channel (PRACH) (S13) and receive a response message for preamble on a PDCCH and a PDSCH corresponding to the PDCCH (S14). In the case of contention-based random access, the UE may perform a contention resolution procedure by further transmitting the PRACH (S15) and receiving a PDCCH and a PDSCH corresponding to the PDCCH (S16).

After the foregoing procedure, the UE may receive a PDCCH/PDSCH (S17) and transmit a physical uplink shared channel (PUSCH)/physical uplink control channel (PUCCH) (S18), as a general DL/LTL signal transmission procedure.

Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc.

While the UCI is transmitted on a PUCCH periodically in general, the UCI may be transmitted on a PUSCH when control information and traffic data need to be simultaneously transmitted. In addition, the UCI may be aperiodically transmitted through a PUSCH according to request/command of a network.

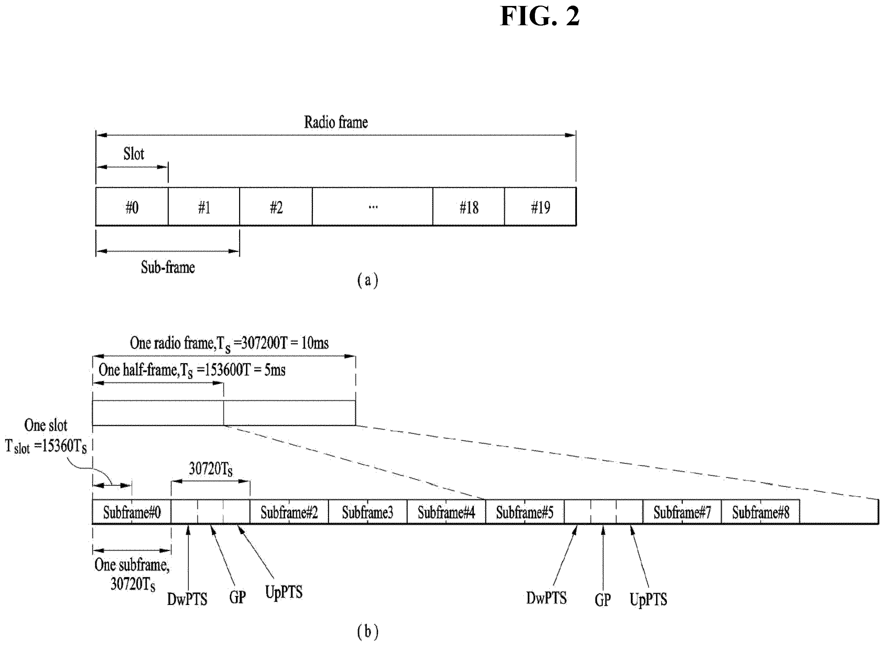

FIG. 2 illustrates a radio frame structure. UL/DL data packet transmission is performed on a subframe-by-subframe basis. A subframe is defined as a predetermined time interval including a plurality of symbols. 3GPP LTE supports a type-1 radio frame structure applicable to frequency division duplex (FDD) and a type-2 radio frame structure applicable to time division duplex (TDD).

FIG. 2(a) illustrates a type-1 radio frame structure. A DL subframe includes 10 subframes each of which includes 2 slots in the time domain. A time for transmitting a subframe is defined as a transmission time interval (TTI). For example, each subframe has a duration of 1ms and each slot has a duration of 0.5ms. A slot includes a plurality of OFDM symbols in the time domain and includes a plurality of resource blocks (RBs) in the frequency domain. Since DL uses OFDM in 3GPP LTE, an OFDM symbol represents a symbol period. The OFDM symbol may be called an SC-FDMA symbol or symbol period. An RB as a resource allocation unit may include a plurality of consecutive subcarriers in one slot.

The number of OFDM symbols included in one slot may depend on cyclic prefix (CP) configuration. CPs include an extended CP and a normal CP. When an OFDM symbol is configured with the normal CP, for example, the number of OFDM symbols included in one slot may be 7. When an OFDM symbol is configured with the extended CP, the length of one OFDM symbol increases, and thus the number of OFDM symbols included in one slot is smaller than that in case of the normal CP. In case of the extended CP, the number of OFDM symbols allocated to one slot may be 6. When a channel state is unstable, such as a case in which a UE moves at a high speed, the extended CP can be used to reduce inter-symbol interference.

When the normal CP is used, one subframe includes 14 OFDM symbols since one slot has 7 OFDM symbols. The first three OFDM symbols at most in each subframe can be allocated to a PDCCH and the remaining OFDM symbols can be allocated to a PDSCH.

FIG. 2(b) illustrates a type-2 radio frame structure. The type-2 radio frame includes 2 half frames. Each half frame includes 4(5) normal subframes and 10 special subframes. The normal subframes are used for UL or DL according to UL-DL configuration. A subframe is composed of 2 slots.

Table 1 shows subframe configurations in a radio frame according to UL-DL configurations.

[Table 1]

| Uplink-downlink configuration | Downlink-to-Uplink Switch point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |

(continued)

| Uplink-downlink configuration | Downlink-to-Uplink Switch point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 5 | 10ms | D | S | U | D | D | D | D | D | D | D |
| 6 | 5ms | D | S | U | U | U | D | S | U | U | D |

In Table 1, D denotes a DL subframe, U denotes a UL subframe and S denotes a special subframe. The special subframe includes DwPTS (Downlink Pilot TimeSlot), GP (Guard Period), and UpPTS (Uplink Pilot TimeSlot). DwPTS is used for initial cell search, synchronization or channel estimation in a UE and UpPTS is used for channel estimation in a BS and UL transmission synchronization in a UE. The GP eliminates UL interference caused by multi-path delay of a DL signal between a UL and a DL.

The radio frame structure is merely exemplary and the number of subframes included in the radio frame, the number of slots included in a subframe, and the number of symbols included in a slot can be vary.

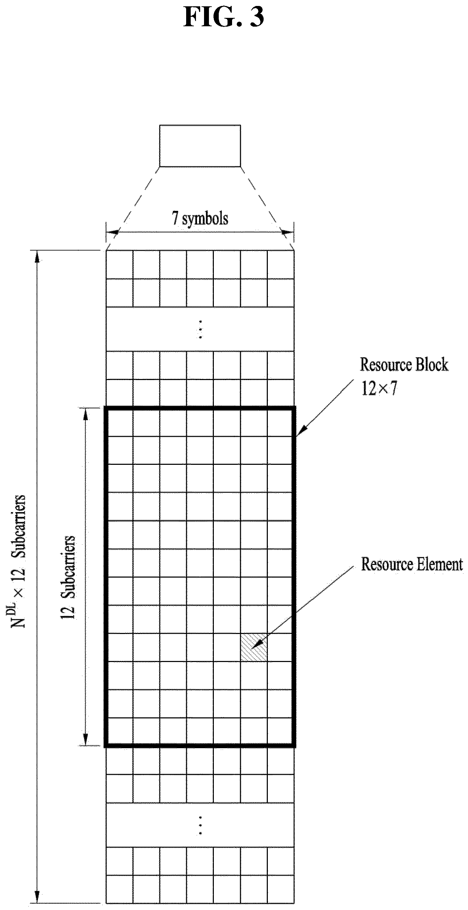

FIG. 3 illustrates a resource grid of a DL slot.

Referring to FIG. 3, a DL slot includes a plurality of OFDM symbols in the time domain. While one DL slot may include 7 OFDM symbols and one resource block (RB) may include 12 subcarriers in the frequency domain in the figure, the present disclosure is not limited thereto. Each element on the resource grid is referred to as a resource element (RE). One RB includes 12×7 REs. The number NRB of RBs included in the DL slot depends on a DL transmit bandwidth. The structure of a UL slot may be same as that of the DL slot.

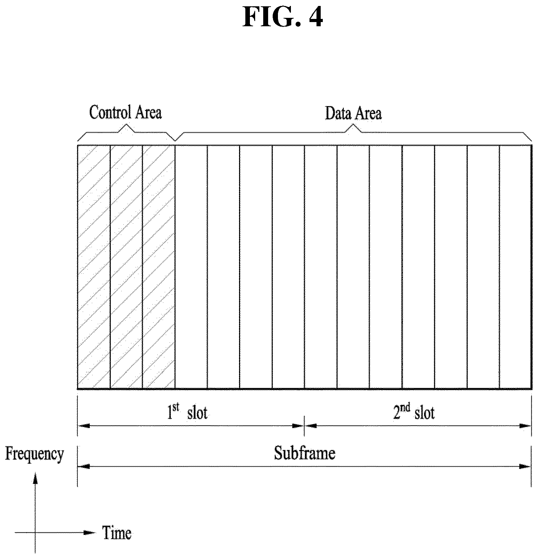

FIG. 4 illustrates a DL subframe structure.

Referring to FIG. 4, a maximum of three (four) OFDM symbols located in a front portion of a first slot within a subframe correspond to a control region to which a control channel is allocated. The remaining OFDM symbols correspond to a data region to which a physical DL shared chancel (PDSCH) is allocated. A basic resource unit of the data region is an RB. Examples of DL control channels used in LTE include a physical control format indicator channel (PCFICH), a physical DL control channel (PDCCH), a physical hybrid ARQ indicator channel (PHICH), etc. The PCFICH is transmitted at a first OFDM symbol of a subframe and carries information regarding the number of OFDM symbols used for transmission of control channels within the subframe. The PHICH is a response of UL transmission and carries a HARQ acknowledgment (ACK)/negative-acknowledgment (NACK) signal. Control information transmitted through the PDCCH is referred to as DL control information (DCI). The DCI includes UL or DL scheduling information or a UL transmit power control command for an arbitrary UE group.

Control information transmitted through the PDCCH is referred to as DL control information (DCI). Formats 0, 3, 3A and 4 for UL and formats 1, 1A, 1B, 1C, 1D, 2, 2A, 2B and 2C for DL are defined as DCI formats. Information field type, the number of information fields, the number of bits of each information field, etc. depend on DIC format. For example, the DCI formats selectively include information such as hopping flag, RB assignment, MCS (Modulation Coding Scheme), RV (Redundancy Version), NDI (New Data Indicator), TPC (Transmit Power Control), HARQ process number, PMI (Precoding Matrix Indicator) confirmation as necessary. Accordingly, the size of control information matched to a DCI format depends on the DCI format. An arbitrary DCI format may be used to transmit two or more types of control information. For example, DIC formats 0/1A is used to carry DCI format 0 or DIC format 1, which are discriminated from each other using a flag field.

A PDCCH may carry a transport format and a resource allocation of a DL shared channel (DL-SCH), resource allocation information of an uplink shared channel (UL-SCH), paging information on a paging channel (PCH), system information on the DL-SCH, information on resource allocation of an upper-layer control message such as a random access response transmitted on the PDSCH, a set of Tx power control commands on individual UEs within an arbitrary UE group, a Tx power control command, information on activation of a voice over IP (VoIP), etc. A plurality of PDCCHs can be transmitted within a control region. The UE can monitor the plurality of PDCCHs. The PDCCH is transmitted on an aggregation of one or several consecutive control channel elements (CCEs). The CCE is a logical allocation unit used to provide the PDCCH with a coding rate based on a state of a radio channel. The CCE corresponds to a plurality of resource element groups (REGs). A format of the PDCCH and the number of bits of the available PDCCH are determined by the number of CCEs. The BS determines a PDCCH format according to DCI to be transmitted to the UE, and attaches a cyclic redundancy check (CRC) to control information. The CRC is masked with a unique identifier (referred to as a radio network temporary identifier (RNTI)) according to an owner or usage of the PDCCH. If the PDCCH is for a specific UE, a unique identifier (e.g., cell-RNTI (C-RNTI)) of the UE may be masked to the CRC. Alternatively, if the PDCCH is for a paging message, a paging identifier (e.g., paging-RNTI (P-RNTI)) may be masked to the CRC. If the PDCCH is for system information (more specifically, a system information block (SIB)), a system information RNTI (SI-RNTI) may be masked to the CRC. When the PDCCH is for a random access response, a random access-RNTI (RA-RNTI) may be masked to the CRC.

The PDCCH carries a message known as DCI which includes resource assignment information and other control information for a UE or UE group. In general, a plurality of PDCCHs can be transmitted in a subframe. Each PDCCH is transmitted using one or more CCEs. Each CCE corresponds to 9 sets of 4 REs. The 4 REs are referred to as an REG. 4 QPSK symbols are mapped to one REG. REs allocated to a reference signal are not included in an REG, and thus the total number of REGs in OFDM symbols depends on presence or absence of a cell-specific reference signal. The concept of REG (i.e. group based mapping, each group including 4 REs) is used for other DL control channels (PCFICH and PHICH). That is, REG is used as a basic resource unit of a control region. 4 PDCCH formats are supported as shown in Table 2.

[Table 2]

| PDCCH format | Number of CCEs (n) | Number of REGs | Number of PDCCH bits |
|---|---|---|---|
| 0 | 1 | 9 | 72 |
| 1 | 2 | 8 | 144 |
| 2 | 4 | 36 | 288 |
| 3 | 5 | 72 | 576 |

CCEs are sequentially numbered. To simplify a decoding process, transmission of a PDCCH having a format including n CCEs can be started using as many CCEs as a multiple of n. The number of CCEs used to transmit a specific PDCCH is determined by a BS according to channel condition. For example, if a PDCCH is for a UE having a high-quality DL channel (e.g. a channel close to the BS), only one CCE can be used for PDCCH transmission. However, for a UE having a poor channel (e.g. a channel close to a cell edge), 8 CCEs can be used for PDCCH transmission in order to obtain sufficient robustness. In addition, a power level of the PDCCH can be controlled according to channel condition.

LTE defines CCE positions in a limited set in which PDCCHs can be positioned for each UE. CCE positions in a limited set that the UE needs to monitor in order to detect the PDCCH allocated thereto may be referred to as a search space (SS). In LTE, the SS has a size depending on PDCCH format. A UE-specific search space (USS) and a common search space (CSS) are separately defined. The USS is set per UE and the range of the CSS is signaled to all UEs. The USS and the CSS may overlap for a given UE. In the case of a considerably small SS with respect to a specific UE, when some CCEs positions are allocated in the SS, remaining CCEs are not present. Accordingly, the BS may not find CCE resources on which PDCCHs will be transmitted to available UEs within given subframes. To minimize the possibility that this blocking continues to the next subframe, a UE-specific hopping sequence is applied to the starting point of the USS.

Table 3 shows sizes of the CSS and USS.

[Table 3]

| PDCCH format | Number of CCEs (n) | Number of candidates in common search space | Number of candidates in dedicated search space |
|---|---|---|---|
| 0 | 1 | - | 6 |
| 1 | 2 | - | 6 |
| 2 | 4 | 4 | 2 |
| 3 | 8 | 2 | 2 |

To control computational load of blind decoding based on the number of blind decoding processes to an appropriate level, the UE is not required to simultaneously search for all defined DCI formats. In general, the UE searches for formats 0 and 1A at all times in the USS. Formats 0 and 1A have the same size and are discriminated from each other by a flag in a message. The UE may need to receive an additional format (e.g. format 1, 1B or 2 according to PDSCH transmission mode set by aBS). The UE searches for formats 1A and 1C in the CSS. Furthermore, the UE may be set to search for format 3 or 3A. Formats 3 and 3A have the same size as that of formats 0 and 1A and may be discriminated from each other by scrambling CRC with different (common) identifiers rather than a UE-specific identifier. PDSCH transmission schemes and information content of DCI formats according to transmission mode (TM) are arranged below.

Transmission mode (TM)

- Transmission mode 1: Transmission from a single base station antenna port
- Transmission mode 2: Transmit diversity
- Transmission mode 3: Open-loop spatial multiplexing
- Transmission mode 4: Closed-loop spatial multiplexing
- Transmission mode 5: Multi-user MIMO (Multiple Input Multiple Output)
- Transmission mode 6: Closed-loop rank-1 precoding
- Transmission mode 7: Single-antenna port (port5) transmission
- Transmission mode 8: Double layer transmission (ports 7 and 8) or single-antenna port (port 7 or 8) transmission
- Transmission mode 9: Transmission through up to 8 layers (ports 7 to 14) or single-antenna port (port 7 or 8) transmission

DCI format

- Format 0: Resource grants for PUSCH transmission
- Format 1: Resource assignments for single codeword PDSCH transmission (transmission modes 1, 2 and 7)
- Format 1A: Compact signaling of resource assignments for single codeword PDSCH (all modes)
- Format 1B: Compact resource assignments for PDSCH using rank-1 closed loop precoding (mod 6)
- Format 1C: Very compact resource assignments for PDSCH (e.g. paging/broadcast system information)
- Format 1D: Compact resource assignments for PDSCH using multi-user MIMO (mode 5)
- Format 2: Resource assignments for PDSCH for closed-loop MIMO operation (mode 4)
- Format 2A: Resource assignments for PDSCH for open-loop MIMO operation (mode 3)
- Format 3/3A: Power control commands for PUCCH and PUSCH with 2-bit/1-bit power adjustments

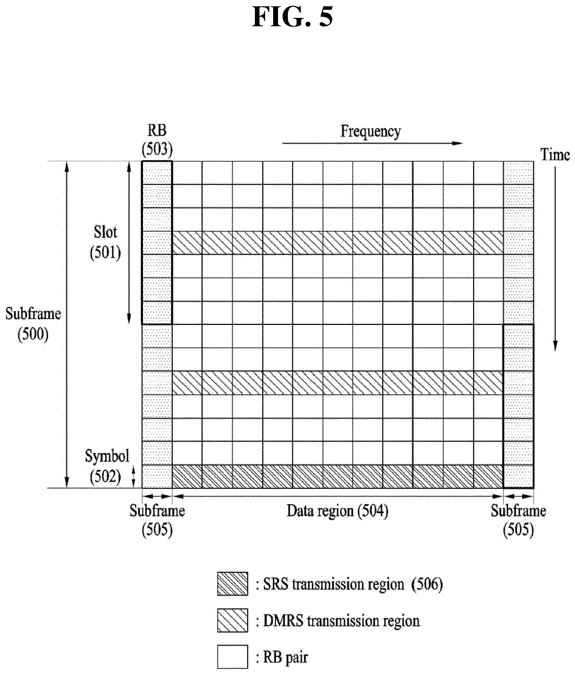

FIG. 5 is a diagram illustrating a UL subframe structure in LTE(-A).

Referring to FIG. 5, a subframe 500 is composed of two 0.5 ms slots 501. Assuming a length of a normal cyclic prefix (CP), each slot is composed of 7 symbols 502 and one symbol corresponds to one SC-FDMA symbol. A resource block (RB) 503 is a resource allocation unit corresponding to 12 subcarriers in the frequency domain and one slot in the time domain. The structure of the UL subframe of LTE(-A) is largely divided into a data region 504 and a control region 505. A data region refers to a communication resource used for transmission of data such as voice, a packet, etc. transmitted to each UE and includes a physical uplink shared channel (PUSCH). A control region refers to a communication resource for transmission of a UL control signal, for example, DL channel quality report from each UE, reception ACK/NACK for a DL signal, UL scheduling request, etc. and includes a physical uplink control channel (PUCCH). A sounding reference signal (SRS) is transmitted through an SC-FDMA symbol that is lastly positioned in the time axis in one subframe. SRSs of a plurality of UEs, which are transmitted to the last SC-FDMAs of the same subframe, can be differentiated according to frequency positions/sequences. The SRS is used to transmit a UL channel state to an eNB and is periodically transmitted according to a subframe period/offset set by a higher layer (e.g., RRC layer) or aperiodically transmitted at the request of the eNB

## 2. NR System

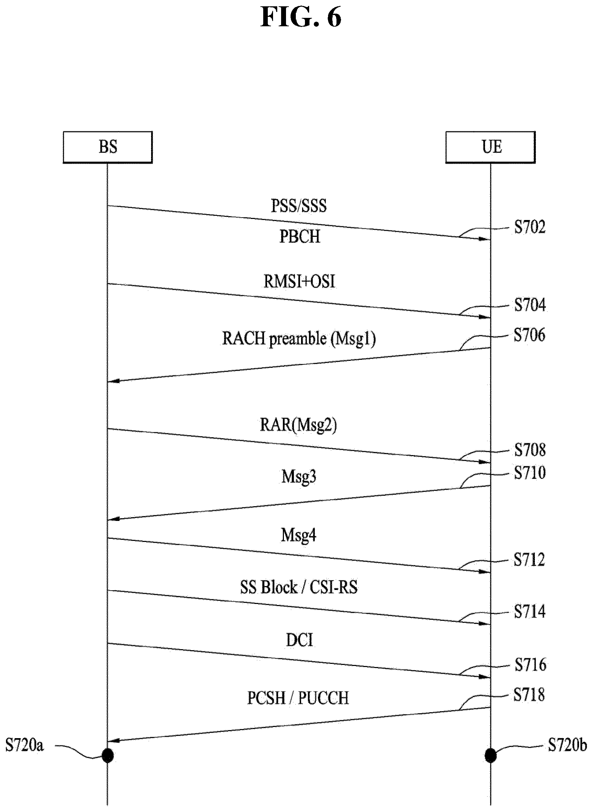

FIG. 6 illustrates a network initial access and subsequent communication process. In NR, a physical channel, a reference signal may be transmitted using beamforming. If a beamforming based signal transmission is supported, a beam management process may be accompanied to align a beam between a BS and a UE. In addition, a signal proposed in the present disclosure may be transmitted/received using beamforming. Beam alignment in Radio Resource Control (RRC) IDLE mode may be performed based on SSB. On the other hand, beam alignment in RRC CONNECTED mode may be performed based on CSI-RS (in DL) and SRS (in UL). Meanwhile, if the beamforming based signal transmission is not supported, a beam related operation may be skipped from the following description.

Referring to FIG. 6, a Base Station (BS) may transmit SSB periodically [S702]. The SSB includes PSS/SSS/PBCH. The SSB may be transmitted using beam sweeping (see FIG. D5). PBCH includes Master Information Block (MIB), and the MIB may include scheduling information on Remaining Minimum System Information (RMSI). Thereafter, the BS may transmit the RMSI and Other System Information (OSI) [S704]. The RMSI may include information (e.g., PRACH configuration information) necessary for a UE to initially access the BS. Meanwhile, after performing SSB detection, the UE identifies a best SSB. Then, the UE may transmit an RACH preamble (i.e., Message 1 (MSg1) to the BS using a PRACH resource linked/corresponding to an index (i.e., beam) of the best SSB [S706]. A beam direction of the RACH preamble is associated with the PRACH resource. The association between the PRACH resource (and/or the RACH preamble) and the SSB (index) may be configured through system information (e.g., RMSI). Thereafter, as a part of an RACH process, the BS may transmit a Random Access Response (RAR) (Msg2) in response to the RACH preamble [S708], the UE may transmit a Msg3 (e.g., RRC connection request) using a UL grant in the RAR [S710], and the BS may transmit a contention resolution message (Msg4) [S720]. The Msg4 may include RRC connection setup.

If RRC connection is set up between the BS and the UE through the RACH process, the following beam alignment may be performed based on SSB/CSI-RS (in DL) and SRS (in UL). For example, the UE may receive the SSB/CSI-RS [S714]. The SSB/CSI-RS may be used for the UE to generate a beam/CSI report. Meanwhile, the BS may make a request for the beam/CSI report to the UE through DCI [S716]. In this case, the UE may generate the beam/CSI report based on the SSB/CSI-RS and then transmit the generated beam/CSI report to the BS through PUSCH/PUCCH [S718]. The beam/CSI report may include a beam measurement result, information on a preferred beam and the like. Each of the BS and UE may switch a beam based on the beam/CSI report [S720a, S720b].

Thereafter, the UE and the BS may perform the procedures and/or methods described/proposed in the former description. For example, based on configuration information obtained from a network access process (e.g., a system information obtaining process, an RRC connection process through RACH, etc.), the UE and the BS may transmit a radio signal by processing information stored in a memory according to the proposal of the present disclosure or process and save a received radio signal to the memory. Here, the radio signal may include at least one of PDCCH, PDSCH and Reference Signal (RS) in case of DL or at least one of PUCCH, OUSCH and SRS in case of UL.

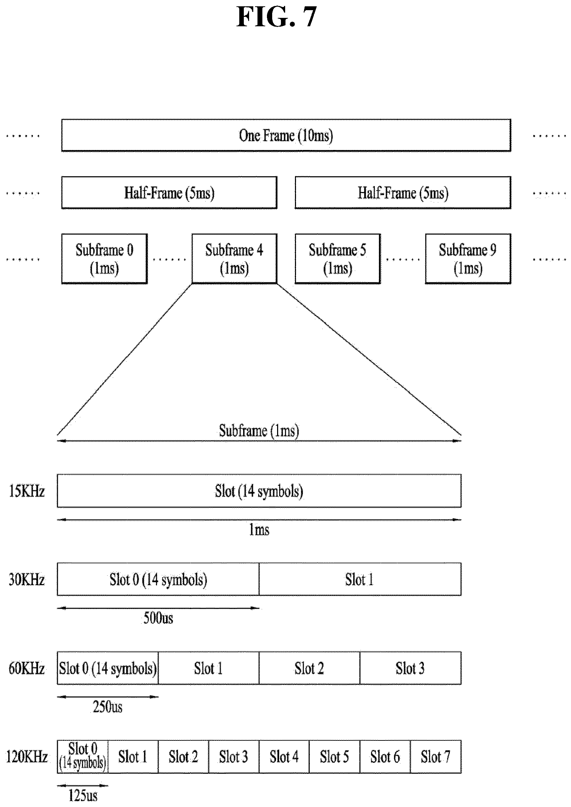

FIG. 7 illustrates a structure of an NR radio frame.

In NR, an Uplink (UL) transmission and a Downlink (DL) transmission are configured with frames. A radio frame has a length of 10ms and is defined as two 5ms Half-Frames (HFs). A half-frame is defined as five 1ms SubFrames (SFs). A subframe is divided into one or more slots, and the number of slots in the subframe depends on SubCarrier Spacing (SCS). Each slot includes 12 or 14 OFDM(A) symbols according to a Cyclic Prefix (CP). In case of using a normal CP, each slot includes 14 symbols. In case of using an extended CP, each slot includes 12 symbols. Here, the symbols may include OFDM symbol (or CP-OFDM symbol) and SC-FDMA symbol (or DFT-s-OFDM symbol).

Table 4 illustrates that in case of using a normal CP, the number of symbols per slot, the number of slots per frame, and the number of slots per subframe are changed depending on SCS.

[Table 4]

| SCS $(15*2^u)$ | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

- $N^{slot}_{symb}$: Number of symbols in slot
- $N^{frame,u}_{slot}$: Number of slots in frame
- $N^{subframe,u}_{slot}$: Number of slots in subframe

Table 5 illustrates that in case of using an extended CP, the number of symbols per slot, the number of slots per frame, and the number of slots per subframe are changed depending on SCS.

[Table 5]

| SCS $(15*2^u)$ | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, OFDM(A) numerology (e.g., SCS, CP length, etc.) may be configured differently among a plurality of cells aggregated for one User Equipment (UE). Hence, an (absolute time) interval of a time resource (e.g., SF, slot, or TTI) (for clarity, referred to as Time Unit (TU)) configured with the same number of symbols may be configured differently among the aggregated cells.

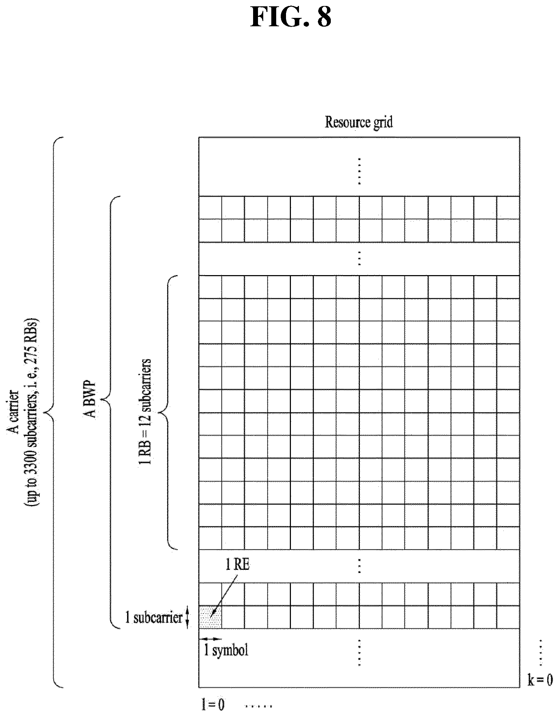

FIG. 8 illustrates a resource grid of a slot.

A slot includes a plurality of symbols in a time domain. For example, in case of a normal CP, one slot includes 14 symbols. In case of an extended CP, one slot includes 12 symbols. A carrier includes a plurality of subcarriers in a frequency domain. A Resource Block (RB) is defined as a plurality of consecutive subcarriers (e.g., 12 subcarriers) in the frequency domain. A Bandwidth Part (BWP) is defined as a plurality of consecutive RBs (or PRBs) in the frequency domain, and may correspond to one numerology (e.g., SCS, CP length, etc.). A carrier may include maximum N (e.g., 5) BWPs. Data communication is performed through an activated BWP, and only one BWP may be activated for one UE. Each element in a resource grid is referred to as a Resource Element (RE) and one complex symbol may be mapped thereto.

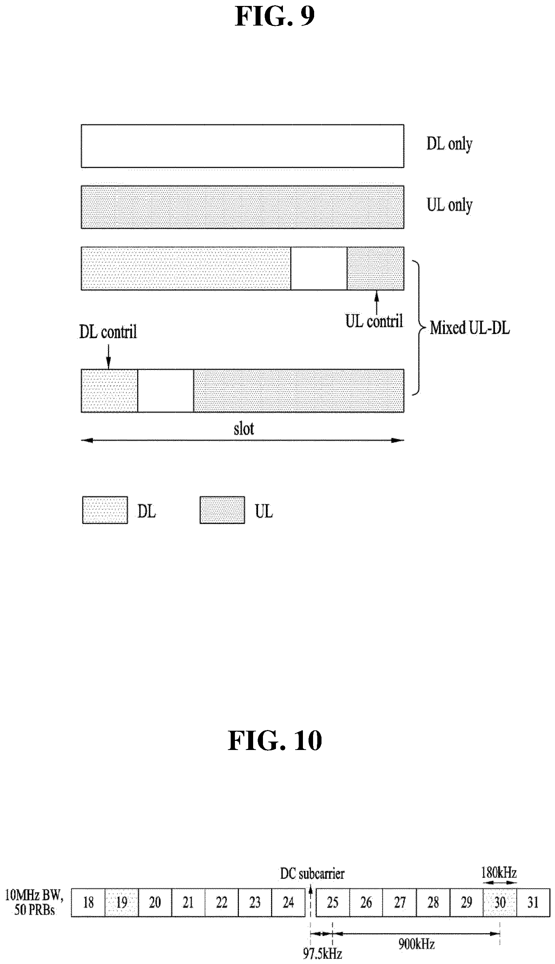

FIG. 9 illustrates a structure of a self-contained subframe.

In the NR system, a frame is characterized in having a self-contained structure that DL control channel, DL or UL data, UL control channel and the like can be entirely included in one slot. For example, firstN symbols in a slot may be used to transmit a DL control channel (hereinafter, DL control region), and last M symbols in the slot may be used to transmit a UL control channel (hereinafter, UL control region). Here, N and M are integers equal to or greater than 0, respectively. A resource region (hereinafter, data region) located between the DL control region and the UL control region may be used for DL or UL data transmission. For example, the following configuration can be considered. Each interval is listed in order of time.

    1. DL only configuration
    2. UL only configuration
    3. Mixed UL-DL configuration

    -    DL region + GP(Guard Period) + UL control region
    -    DL control region + GP + UL region

    * DL region: (i) DL data region, (ii) DL control region + DL data region
    * UL region: (i) UL data region, (ii) UL data region + UL control region

Physical Downlink Control Channel (PDCCH) may be transmitted in a DL control region, and Physical Downlink Shared Channel (PDSCH) may be transmitted in a DL data region. Physical Uplink Control Channel (PUCCH) may be transmitted in a UL control region, and Physical Uplink Shared Channel (PUSCH) may be transmitted in a UL data region. Downlink Control Information (DCI), e.g., DL data scheduling information, UL data scheduling information, and the like may be transmitted on PDCCH. Uplink Control Information (UCI), e.g., Positive Acknowledgement/Negative Acknowledgement (ACK/NACK) information on DL data, Channel State Information (CSI) information, Scheduling Request (SR) and the like may be transmitted on PUCCH. A GP provides a time gap in a process that a BS and a UE switch from a transmission mode to a reception mode, *and vice versa.* Some symbols at the timing of switching to UL from DL in a subframe may be configured as a GP.

### 3. NB-IoT or NR-lite

A description will be given of narrowband Internet of things (NB-IoT). While NB-IoT is described based on the 3GPP LTE standards for convenience, the following description is also applicable to the 3GPP NR standards. An NR Standard in which NB-IoT is applied may include an NR-lite Standard. For this purpose, some technical configurations may be replaced with other ones in interpretation (e.g., LTE band→NR band and subframe→slot). NB-IoT supports three operation modes: in-band mode, guard-band mode, and stand-alone mode. The same requirements apply to each mode.

    (1) In-band mode: a part of the resources of the LTE band are allocated to NB-IoT.
    (2) Guard-band mode: a guard frequency band of the LTE band is used, and an NB-IoT carrier is arranged as close as possible to an edge subcarrier of the LTE band.
    (3) Stand-alone mode: some carriers in the GSM band are allocated to NB-IoT.

An NB-IoT UE searches for an anchor carrier in units of 100 kHz, for initial synchronization, and the center frequency of the anchor carrier should be located within ±7.5 kHz from a 100-kHz channel raster in the in-band and guard-band. Further, the center 6 physical resource blocks (PRBs) of the LTE PRBs are not allocated to NB-IoT. Therefore, the anchor carrier may be located only in a specific PRB.

FIG. 8 is a diagram illustrating arrangement of an in-band anchor carrier in an LTE bandwidth of 10MHz.

Referring to FIG. 8, a direct current (DC) subcarrier is located on a channel raster. Since the center frequency spacing between adjacent PRBs is 180 kHz, the center frequencies of PRBs 4, 9, 14, 19, 30, 35, 40 and 45 are located at ±2.5kHz from the channel raster. Similarly, when the bandwidth is 20MHz, the center frequency of a PRB suitable as the anchor carrier is located at ±2.5kHz from the channel raster, and when the bandwidth is 3MHz, 5MHz, or 15MHz, the center frequency of a PRB suitable as the anchor carrier is located at ±7.5kHz from the channel raster.

In the guard-band mode, given bandwidths of 10MHz and 20MHz, the center frequency of a PRB immediately adjacent to an edge PRB of the LTE system is located at ±2.5kHz from the channel raster. Further, given bandwidths of 3MHz, 5MHz, and 15MHz, a guard frequency band corresponding to three subcarriers from an edge PRB may be used, and thus the center frequency of the anchor carrier may be located at ±7.5kHz from the channel raster.

In the stand-alone mode, an anchor carrier is aligned with the 100-kHz channel raster, and all GSM carriers including the DC carrier may be available as the NB-IoT anchor carrier.

Further, NB-IoT may support multiple carriers, and a combination of in-band and in-band, a combination of in-band and guard-band, a combination of guard-band and guard-band, and a combination of stand-alone and stand-alone are available.

NB-IoT DL uses OFDMA with a 15-kHz SCS. OFDMA provides orthogonality between subcarriers, so that the NB-IoT system and the LTE system may coexist smoothly.

For NB-IoT DL, physical channels such as a narrowband physical broadcast channel (NPBCH), a narrowband physical downlink shared channel (NPDSCH), and a narrowband physical downlink control channel (NPDCCH) may be provided, and physical signals such as a narrowband primary synchronization signal (NPSS), a narrowband primary synchronization signal (NSSS), and a narrowband reference signal (NRS) are provided.

The NPBCH delivers minimum system information required for an NB-IoT UE to access the system, a master information block-narrowband (MIB-NB) to the NB-IoT UE. The NPBCH signal may be transmitted repeatedly eight times in total for coverage enhancement. The transport block size (TBS) of the MIB-NB is 34 bits and updated every TTI of 640ms. The MIB-NB includes information about an operation mode, a system frame number (SFN), a hyper-SFN, the number of cell-specific reference signal (CRS) ports, and a channel raster offset.

The NPSS includes a Zadoff-Chu (ZC) sequence of length 11 and root index 5. The NPSS may be generated by the following equation.

[Equation 1]

$$d_l(n) = S(l) \cdot e^{-j\frac{\pi u n(n+1)}{11}}, \quad n = 0,1,...,10$$

S(l) for symbol index l may be defined as illustrated in Table 6.

[Table 6]

| Cyclic prefix length | S(3),..., S(13) | | | | | | | | | | |
|---|---|---|---|---|---|---|---|---|---|---|---|
| Normal | 1 | 1 | 1 | 1 | -1 | -1 | 1 | 1 | 1 | -1 | 1 |

The NSSS includes a combination of a ZC sequence of length 131 and a binary scrambling sequence such as a Hadamard sequence. The NSSS indicates a PCID to NB-IoT UEs within the cell by the combination of sequences.

The NSSS may be generated by the following equation.

[Equation 2]

$$d(n) = b_q(m) e^{-j2\pi\theta_f n} e^{-j\frac{\pi u n'(n'+1)}{131}}$$

Variables applied to Equation 2 may be defined as follows.

[Equation 3]

$$n = 0, 1, \ldots, 131$$

$$n' = n \bmod 131$$

$$m = n \bmod 128$$

$$u = N_{\text{ID}}^{\text{Ncell}} \bmod 126 + 3$$

$$q = \left\lfloor \frac{N_{\text{ID}}^{\text{Ncell}}}{126} \right\rfloor$$

A binary sequence $b_q(m)$ may be defined as illustrated in Table 6, and $b_0(m)$ to $b_3(m)$ represent columns 1, 32, 64, and 128 of a Hadamard matrix of order 128. A cyclic shift $\theta_f$ for a frame number $n_f$ may be defined by Equation 4 below.

[Table 7]

| q | $b_q(0), \ldots b_q(127)$ |
|---|---|
| 0 | [1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1] |
| 1 | [1 -1 -1 1 -1 1 1 -1 -1 1 1 -1 1 -1 -1 1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1 1 -1 -1 1 1 -1 -1 1 -1 1 1 -1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1] |
| 2 | [1 -1 -1 1 -1 1 1 -1 -1 1 1 -1 1 -1 -1 1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1 1 -1 -1 1 1 -1 1 -1 -1 1 1 -1 1 -1 -1 1 1 -1 -1 1 -1 1 1 -1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1 1 -1 -1 1 1 -1 1 -1 -1 1 1 -1 1 -1 -1 1] |
| 3 | [1 -1 -1 1 -1 1 1 -1 -1 1 1 -1 1 -1 -1 1 -1 1 1 -1 1 -1 -1 1 1 -1 -1 1 -1 1 1 -1 1 -1 -1 1 -1 1 1 -1 -1 1 1 -1 1 -1 -1 1 -1 1 1 -1 1 -1 -1 1 1 -1 1 -1 -1 1 -1 1 1 -1 -1 1 1 -1 1 -1 -1 1 -1 1 1 -1 1 -1 -1 1 1 -1 1 -1 -1 1 -1 1 1 -1 1 -1 -1 1 1 -1 -1 1 1 -1 -1 1 1 -1 1 -1 -1 1 -1 1 1 -1 1 -1 -1 1 1 -1 -1 1 -1 1 1 -1 1 -1 -1 1 -1 1 1 -1] |

[Equation 4]

$$\theta_f = \frac{33}{132} (n_f / 2) \bmod 4$$

In Equation 4, nf represents a radio frame number and mod represents a modulo function.

The NRS, which is a reference signal for channel estimation required for demodulation of a DL physical channel, is generated in the same manner as in LTE. However, the NRS uses a narrowband-physical cell ID (NB-PCID) (or NCell ID or NB-IoT BS ID) as an initial value for initialization. The NRS is transmitted through one or two antenna ports (p=2000 and 2001).

The NPDCCH has the same transmission antenna configuration as the NPBCH, and delivers DCI. The NPDCCH supports three types of DCI formats. DCI format N0 includes scheduling information about a narrowband physical uplink shared channel (NPUSCH), and DCI formats N1 and N2 include NPDSCH scheduling information. The NPDCCH may be transmitted repeatedly up to 2048 times, for coverage enhancement.

The NPDSCH is used to transmit data (e.g., a TB) of a transport channel such as a DL-SCH or a paging channel (PCH). The NPDSCH has a maximum TBS of 680 bits and may be transmitted repeatedly up to 2048 times, for coverage enhancement.

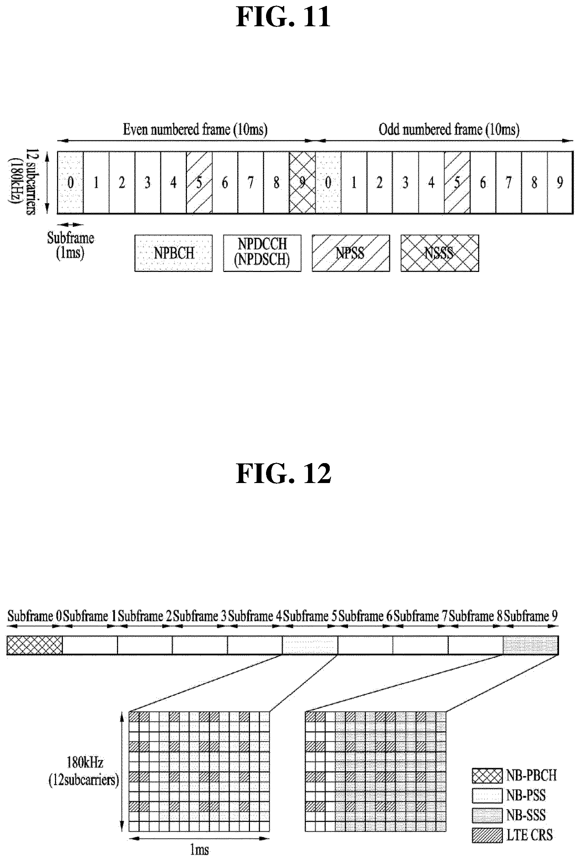

FIG. 11 is a diagram illustrating positions at which NB-IoT DL physical channels/signals are transmitted in an FDD LTE system.

Referring to FIG. 11, the NPBCH is transmitted in the first subframe of each radio frame, the NPSS is transmitted in the sixth subframe of each radio frame, and the NSSS is transmitted in the last subframe (e.g., tenth subframe) of each even-numbered frame. An NB-IoT UE acquires frequency synchronization, symbol synchronization, and frame synchronization and searches 504 PCIDs (i.e., BS IDs) by synchronization signals (the NPSS and the NSSS). The LTS synchronization signals are transmitted in 6 PRBs, whereas the NB-IoT synchronization signals are transmitted in one PRB.

In NB-IoT, UL physical channels include a narrowband physical random access channel (NPRACH) and an NPUSCH, and support single-tone transmission and multi-tone transmission. Multi-tone transmission is supported only for an SCS of 15kHz, and single-tone transmission is supported for SCSs of 3.5kHz and 15kHz. On UL, when the SCS is 15kHz, orthogonality with the LTE system is maintained, thereby providing optimum performance. However, the 3.75-kHz SCS may destroy the orthogonality, resulting in performance degradation due to interference.

An NPRACH preamble includes four symbol groups, each including a CP and five (SC-FDMA) symbols. The NPRACH supports only single-tone transmission with the 3.75-kHz SCS and provides CPs of 66.7$\mu$s and 266.67$\mu$s in length to support different cell radiuses. Each symbol group is subjected to frequency hopping in the following hopping pattern. Subcarriers carrying the first symbol group are determined pseudo-randomly. The second symbol group hops by one subcarrier, the third symbol group hops by six subcarriers, and the fourth symbol group hops by one subcarrier. In the case of repeated transmissions, the frequency hopping procedure is repeatedly applied. To enhance coverage, the NPRACH preamble may be repeatedly transmitted up to 128 times.

The NPUSCH supports two formats. NPUSCH format 1 is used for UL-SCH transmission and has a maximum TBS of 1000 bits. NPUSCH format 2 is used for UCI transmission such as HARQ-ACK signaling. NPUSCH format 1 supports single-tone transmission and multi-tone transmission, whereas NPUSCH format 2 supports only single-tone transmission. In single-tone transmission, p/2-binary phase shift keying (BPSK) and p/4-quadrature phase shift keying (QPSK) may be used to reduce a peak-to-average power ratio (PAPR).

In the stand-alone and guard-band modes, all resources of one PRB may be allocated to NB-IoT. However, there is a constraint on resource mapping in the in-band mode, for co-existence with a legacy LTE signal. For example, resources (OFDM symbols 0 to 2 in each subframe) classified as a region allocated for LTE control channels may not be allocated to the NPSS and NSSS, and NPSS and NSSS symbols mapped to LTE CRS REs are punctured.

FIG. 12 is a diagram illustrating resource allocation to an NB-IoT signal and an LTE signal in the in-band mode. Referring to FIG. 12, for ease of implementation, the NPSS and NSSS are not transmitted in OFDM symbols corresponding to the control region of the legacy LTE system (the first three OFDM symbols of a subframe) regardless of an operation mode. NPSS/NSS REs colliding with LTE CRS REs in physical resources are punctured, for mapping without affecting the legacy LTE system.

After the cell search, the NB-IoT UE demodulates the NPBCH without system information except for a PCID. Therefore, NPBCH symbols may not be mapped to the LTE control channel allocation region. Moreover, since the NB-IoT UE assumes four LTE antenna ports (e.g., p=0, 1, 2, and 3) and two NB-IoT antenna ports (e.g., p=2000 and 2001) in the situation without system information, the NB-IoT UE may not allocate the NPBCH to CRS REs and NRS REs. Therefore, the NPBCH is rate-matched according to available resources.

After demodulating the NPBCH, the NB-IoT UE may acquire information about the number of CRS antenna ports. However, the NB-IoT UE still may not acquire information about the LTE control channel allocation region. Therefore, the NPDSCH carrying system information block type 1 (SIB 1) data is not mapped to resources classified as the LTE control channel allocation region.

However, unlike the NPBCH, REs which are not allocated to the LTE CRS may be allocated to the NPDSCH. Since the NB-IoT UE has acquired all information related to resource mapping after receiving SIB 1, an eNB may map the NPDSCH (except for the case where SIB1 is transmitted) and the NPDCCH to available resources based on LTE control channel information and the number of CRS antenna ports.

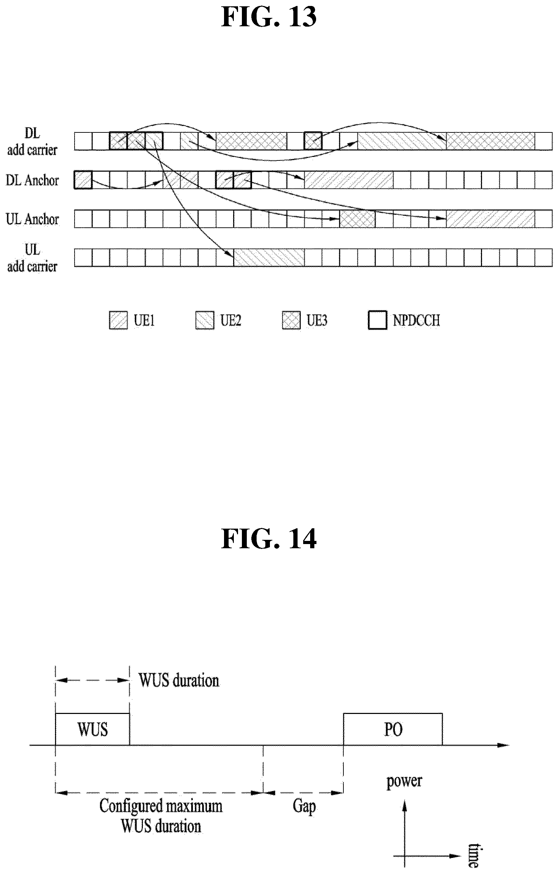

FIG. 13 is a diagram illustrating an exemplary operation when multiple carriers are configured in FDD NB-IoT. In FDD NB-IoT, a DL/LTL anchor carrier is basically configured, and a DL (and UL) non-anchor carrier may be additionally configured. RRCConnectionReconfiguration may include information about the non-anchor carrier. When the DL non-anchor carrier is configured, a UE receives data only in the DL non-anchor carrier. In contrast, synchronization signals (NPSS and NSSS), a broadcast signal (MIB and SIB), and a paging signal are provided only in the anchor carrier. When the DL non-anchor carrier is configured, the UE listens to only the DL non-anchor carrier while the UE is in an RRC_CONNECTED state. Similarly, when the UL non-anchor carrier is configured, the UE transmits data only in the UL non-anchor carrier, not being allowed to transmit data simultaneously in the UL non-anchor carrier and the UL anchor carrier. When the UE transitions to an RRC_IDLE state, the UE returns to the anchor carrier.

In the illustrated case of FIG. 11, UE1 is configured only with anchor carriers, UE2 is configured additionally with a DL/LTL non-anchor carrier, and UE3 is configured additionally with a DL non-anchor carrier. Accordingly, each UE transmits and receives data in the following carriers.

- UE1: data reception (DL anchor carrier) and data transmission (UL anchor carrier)
- UE2: data reception (DL non-anchor carrier) and data transmission (UL non-anchor carrier)

- UE3: data reception (DL non-anchor carrier) and data transmission (UL anchor carrier)

The NB-IoT UE is not capable of simultaneous transmission and reception, and a transmission/reception operation is limited to one band. Therefore, even though multiple carriers are configured, the UE requires only one transmission/reception chain in a 180-kHz band.

Table 8 lists system information defined in NB-IoT. A system information acquisition/changing process is performed only in the RRC_IDLE state. The UE does not expect to receive an SIB in the RRC_CONNECTED state. When system information has been changed, the system information change may be indicated to the UE by paging or a direct indication. For the purpose of providing the changed system information, the eNB may transition the UE to the RRC_IDLE state.

[Table 8]

| System Information Block | Content |
| --- | --- |
| MIB-NB | Essential information required to receive further system information |
| SIB1-NB | Cell access and selection, other SIB scheduling |
| SIB2-NB | Radio resource configuration information |
| SIB3-NB | Cell re-selection information for intra-frequency, interfrequency |
| SIB4-NB | Neighboring cell related information relevant for intrafrequency cell re-selection |
| SIB5-NB | Neighboring cell related information relevant for interfrequency cell re-selection |
| SIB14-NB | Access Barring parameters |
| SIB16-NB | Information related to GPS time and Coordinated Universal Time (UTC) |

The MIB-NB is transmitted on the NPBCH and updated every 640ms. The first transmission of the MIB-NB takes place in subframe #0 of a radio frame satisfying SFN mod 0, and the MIB-NB is transmitted in subframe #0 of every radio frame. The MIB-NB is transmitted in 8 independently decodable blocks, each block being transmitted repeatedly 8 times.

Table 9 describes the configuration of fields of the MIB-NB.

[Table 9]

```
MasterInformationBlock-NB ::= SEQUENCE {
        systemFrameNumber-MSB-r13       BIT STRING (SIZE (4)),
        hyperSFN-LSB-r13                BIT STRING (SIZE (2)),
        schedulingInfoSIB1-r13          INTEGER (0..15),
        systemInfoValueTag-r13          INTEGER (0..31),
        ab-Enabled-r13                  BOOLEAN,
        operationModeInfo-r13           CHOICE {
                inband-SamePCI-r13              Inband-SamePCI-NB-r13,
                inband-DifferentPCI-r13         Inband-DifferentPCI-NB-r13,
                guardband-r13                   Guardband-NB-r13,
                standalone-r13                  Standalone-NB-r13
        },
        spare                           BIT STRING (SIZE (11))
}

ChannelRasterOffset-NB-r13 ::= ENUMERATED {khz-7dot5, khz-2dot5, khz2dot5, khz7dot5}

Guardband-NB-r13 ::= SEQUENCE {
        rasterOffset-r13        ChannelRasterOffset-NB-r13,
        spare                   BIT STRING (SIZE (3))
}

Inband-SamePCI-NB-r13 ::= SEQUENCE {
        eutra-CRS-SequenceInfo-r13      INTEGER (0..31)
}

Inband-DifferentPCI-NB-r13 ::= SEQUENCE {
        eutra-NumCRS-Ports-r13          ENUMERATED {same, four},
        rasterOffset-r13                ChannelRasterOffset-NB-r13,
        spare                           BIT STRING (SIZE (2))
}

Standalone-NB-r13 ::= SEQUENCE {
        spare                           BIT STRING (SIZE (5))
}
```

The SIB1-NB is transmitted on the NPDSCH, with a periodicity of 2056ms. The SIB 1-NB is transmitted in subframe #4 of each of the even-numbered radio frames (i.e., 8 radio frames) of 16 consecutive radio frames. The indexes of the first radio frames carrying the SIB1-NB are derived according to an NPDSCH repetition number, Nrep and PCIDs. Specifically, when Nrep is 16 and the PCIDs are 2n and 2n+1, the indexes of the first radio frames are {0, 1}, and when Nrep is 8 and the PCIDs are 2n and 2n+1, the indexes of the first radio frames corresponding to the PCID of even numbers and the PCID of odd numbers are {0, 16}. Further, when Nrep is 4 and the PCIDs are 4n, 4n+1, 4n+2, and 4n+3, the indexes of the first radio frames are {0, 16, 32, 48}. The SIB 1-NB is transmitted repeatedly Nrep times during 2560ms, equally distributed across 2560nm. The TBS and Nrep of the SIB1-NP are indicated by SystemInformationBlockType1-NB in the MIB-NB.

Table 10 lists NPDSCH repetition numbers according to SystemInformationBlockType 1-NB.

[Table 10]

| Value of schedulingInfoSIB1 | Number of NPDSCH repetitions |
|---|---|
| 0 | 4 |
| 1 | 8 |
| 2 | 16 |
| 3 | 4 |
| 4 | 8 |
| 5 | 16 |
| 6 | 4 |
| 7 | 8 |

(continued)

| Value of schedulingInfoSIB1 | Number of NPDSCH repetitions |
|---|---|
| 8 | 16 |
| 9 | 4 |
| 10 | 8 |
| 11 | 16 |
| 12-15 | Reserved |

An SI message (i.e., information subsequent to the SIB2-NB) is transmitted within a time-domain window that occurs periodically. Scheduling information for the SI message is provided by the SIB1-NB. Each SI message is associated with one SI-window, and SI-windows of different SI messages do not overlap with each other. That is, only corresponding SI is transmitted within one SI-window. The lengths of the SI-windows are equal and configurable.

FIG. 14 illustrates Wake-Up Signal (WUS) transmission.

An NB-IoT UE or a Bandwidth reduced Low complexity/Coverage Enhancement (BL/CE) UE may use a WUS to reduce power consumption related to paging monitoring according to cell configuration. When configuring a WUS, the following operation may be considered in idle mode.

- A WUS may instruct a UE to receive a paging in a corresponding cell by monitoring MPDCCH or NPDCCH.
- In case of a UE for which extended Discontinuous Reception (eDRX) is not configured, a WUS may be associated with a single Paging Occasion (PO) (N = 1). The PO means a time resource/interval (e.g., subframe, slot) in which PDCCH scrambled with P-RNTI may be transmitted for a paging. A single PO or a plurality of POs are included in a Paging Frame (PF), and the PF may be periodically configured based on UE_ID. Here, the UE_ID may be determined based on International Mobile Subscriber Identity (IMSI).
- In case of a UE for which eDRX is configured, a WUS may be associated with one or more paging occasions (N $\geq$ 1) in a Paging Transmission Window (PTW). If eDRX is configured, Paging Hyper-frames (PH) may be periodically configured based on UE_ID. PTW is defined in PH, and a UE monitors PO(s) on PF in the PTW.
- In case of detecting a WUS, a UE may monitor N paging occasions thereafter for the paging message reception.
- A paging operation of Mobility Management Entity (MME) is not aware that a BS uses a WUS.

Referring to FIG. 14, a WUS may be transmitted in 'configured maximum WUS duration' (hereinafter, a WUS window) prior to a PO. Although a UE may expect WUS repetition transmission in the WUS window, the actual WUS transmission number may be smaller than the maximum WUS transmission number in the WUS window. For example, the WUS repetition number may be small for a UE in good coverage. For clarity, a resource/occasion for transmitting a WUS in a WUS window will be referred to as a WUS resource. A WUS resource may be defined as a plurality of consecutive OFDM symbols and a plurality of consecutive subcarriers. A WUS resource may be defined as a plurality of consecutive OFDM symbols and a plurality of consecutive subcarriers in a subframe or slot. For example, a WUS resource may be defined as 14 consecutive OFDM symbols and 12 consecutive subcarriers. A gap exists between a WUS window and a PO, and a UE does not monitor a WUS in a gap. If a WUS is detected from a WUS window, a UE may monitor a paging related signal in one or more POs related to the WUS (window). In case of NB-IoT, a UE in RRC_IDLE state may receive a paging on an anchor or non-anchor carrier based on system information.

In a legacy system, a WUS may be generated based on Equation 5 below.

[Equation 5]

$$w(m) = \theta_{n_f, n_s}(m') \cdot e^{-\frac{j\pi u n(n+1)}{131}}$$

Here, m is an integer equation to or greater than 0 and equal to or smaller than 131. It is defined as m'= m + 132x, and x indicates a subframe number. It is defined as n = m mod 132. $\theta_{n_f, n_s}(m')$ and u may be defined as Equation 6.

[Equation 6]

$$\theta_{n_f,n_s}(m') = \begin{cases} 1, & \text{if } c_{n_f,n_s}(2m') = 0 \text{ and } c_{n_f,n_s}(2m'+1) = 0 \\ -1, & \text{if } c_{n_f,n_s}(2m') = 0 \text{ and } c_{n_f,n_s}(2m'+1) = 1 \\ j, & \text{if } c_{n_f,n_s}(2m') = 1 \text{ and } c_{n_f,n_s}(2m'+1) = 0 \\ -j, & \text{if } c_{n_f,n_s}(2m') = 1 \text{ and } c_{n_f,n_s}(2m'+1) = 1 \end{cases}$$

$$u = \left(N_{ID}^{Ncell} \bmod 126\right) + 3$$

$N_{ID}^{Ncell}$ is a physical layer cell ID used in a narrowband. In case of MTC, it may become $N_{ID}^{Cell}$ (physical layer cell ID). Hereinafter, $N_{ID}^{Ncell}$ or $N_{ID}^{Cell}$ may be simply referred to as a cell ID.

In a legacy system, an initial value of a scrambling sequence of a WUS may be derived based of Equation 7.

[Equation 7]

$$c_{\text{init\_WUS}} = (N_{ID}^{Ncell} + 1)\left(\left(10n_{f\_start\_PO} + \left\lfloor \frac{n_{s\_start\_PO}}{2} \right\rfloor\right) \bmod 2048 + 1\right)2^9 + N_{ID}^{Ncell}$$

$n_f$_start_po indicates a first frame of a first PO to which the WUS is associated. $n_s$_start_po indicates a first slot of a first PO to which a MUS (or MWUS) is associated. Cell ID is as described above.

Prior to monitoring a search space for the paging, a WUS capable UE capable of using a WUS attempts to detect a WUS based on information configured by a BS. If detecting the WUS, the UE may expect that a paging will be transmitted in POs associated with the corresponding WUS detected position and monitor a search space for the paging purpose. If failing to detect the WUS, the UE may not monitor the search space for the paging purpose. As shown in FIG. 14, a WUS transmission position may be determined as a relative position to a PO indicated by a WUS. In the related art, all WUS capable UEs that monitor the same PO are defined to share the same WUS and the WUS transmission position.

Assumption of an antenna port in specific time interval unit may be necessary to obtain a diversity effect while WUS transmission is in progress. In the following, the specific time interval unit includes a subframe, slot and/or symbol group unit. If the number of NRS port(s) exceeds 1, a UE may make assumption of the same antenna port in a single time interval only. If the number of NRS ports exceeds 1, the UE is unable to assume that a WUS is transmitted through the same antenna port for a length that exceeds a single time interval. If a BS uses different antenna ports for WUSs transmitted in different time intervals, respectively, it may bring a diversity effect, whereby the UE may obtain a diversity gain in the WUS reception. Through this, the BS may advantageously obtain overhead reduction that reduces the number of time intervals necessary for the WUS transmission, and the UE early detects a WUS in an earlier time, thereby expecting the power saving effect attributed to the early detection.

Yet, in another aspect, in NB-IoT, a cross time period (or interval) combining scheme may be used to raise a Signal to Noise Ratio (SNR) gain by combining signals/channels between different time intervals. As described above, the time intervals may be in subframe/ slot and/or symbol group units. This method may obtain a gain in case that an MCL environment of a UE is not good. For example, the combining may be performed in symbol unit (or level) on the assumption that signals/channels transmitted in different time intervals experience almost same wireless communication environment. Yet, in order to assume that signals/channels transmitted in different time intervals are in the same wireless communication environment, the assumption of the same antenna port between time intervals to combine is necessary. Hence, if it is assumed that the same antenna port is used within a single time interval only, it may be inappropriate for the cross time period (or interval) combining.

Based on the above problem, the present disclosure handles a method of assuming the same antenna port for WUS transmission of a UE. In this case, an antenna port may mean a unit of transmitting a signal/channel through a single wireless communication environment in aspect of a UE. A unit of transmitting a signal/channel through a single wireless communication environment may be configured by a position, array, and pre- or post-baseband processing precoding applied form of physical antennas.

Hereinafter, although the present disclosure describes a method proposed with reference to NB-IoT and MTC, it is obvious that the same idea is generally applicable to a random communication system. As described above, an IoT/MTC based operation can be performed in the NR system, which may be named NR-lite for example. Therefore, the term of NPDCCH or MPDCCH described in the present disclosure may be interpreted as a general term that refers to a control channel on a physical layer. In addition, although embodiments of the present disclosure are described with reference to a WUS that indicates a presence or non-presence of a paging transmission in IDLE mode, it is obvious that the same idea is identically applicable to a random signal/channel for the purpose of indicating additional information (e.g., a presence or non-presence of transmission) of a signal/channel having a random purpose. For example, it is usable for the purpose of intending to support a power saving operation of a UE, which uses the 3GPP NR standard, in connected mode.

Hereinafter, methods proposed in the present disclosure are operable in independent forms, respectively, and it is obvious that they can be used in a combined manner unless violating each other.

**Structure of antenna port assumption**

Proposed in the following is a method of assuming antenna diversity between time intervals included in a transmission interval of a WUS when a UE monitors a WUS transmittable in N time intervals. In this case, the time intervals may be limited only to targets of time intervals usable for the purpose of WUS transmission. Here, the time intervals for the WUS transmission purpose mean time intervals used in determining a length of WUS transmission, and are included in a time interval of performing the assumption of the same antenna port even if WUS transmission is dropped instead of being performed actually,.

The following methods are independently usable in a single system, or one or more of the methods are usable in combination. For example, a plurality of antenna port assumptions are usable all in a single BS, and a UE may assume a WUS transmission form in a manner that one of the assumptions is configured for the UE implicitly or explicitly.

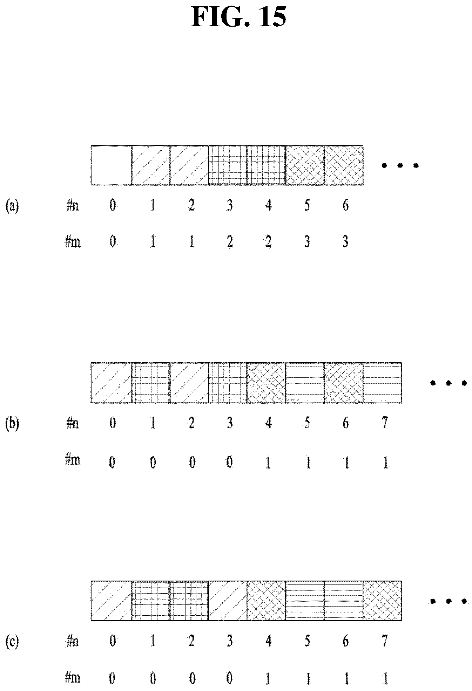

FIG. 15 (a) shows one embodiment of an antenna port assumption structure proposed in the present disclosure.

Referring to FIG. 15 (a), when a transmission of a WUS transmitted through N time intervals starts in a time interval of 'n = 0', a UE may assume that a signal is transmitted using the same antenna port only for a pair of $(n = 2m - 1)^{th}$ time interval and $(n = 2m)^{th}$ time interval only. In other cases, the assumption of the same antenna port is not applicable. For example, the same antenna port assumption may not be applied to the case of m = 1 or the case of m = 2.

Each block in FIG. 15 (a) means each time interval, and a UE may make the assumption of the same antenna port for the time intervals shown with the same shade.

If the assumption of the same antenna port is used, as shown in FIG. 15 (a), it is advantageous in that a form of optimizing the antenna port assumption is changeable depending on each coverage level. For example, when an actual transmission duration in which a WUS is actually transmitted is defined as $R_{AD}$, in case of $R_{AD} = 2$, a UE may obtain an antenna diversity gain by assuming that two time intervals use different antenna ports, respectively. In case of $R_{AD} = 4$, for a time interval pair of n = 1 and 2, it is able to obtain a combining gain through the same antenna port assumption. And, among time intervals of n = 0, a pair of n = 1, 2, and n = 3, it is able to obtain an antenna diversity gain of expecting different wireless communication environments. For a case of $R_{AD} > 4$, a scheme of obtaining gains of two types in $R_{AD} = 4$ appears repeatedly.

FIG. 15 (b) shows another embodiment of an antenna port assumption structure proposed in the present disclosure.

Referring to FIG. 15 (b), when a transmission of a WUS transmitted through N time intervals starts in $(n = 0)^{th}$ time interval, a UE may assume that a signal is transmitted using the same antenna port for a pair of $(n = 4m)^{th}$ time interval and $(n = 4m + 2)^{th}$ time interval when $m \geq 0$ and that a signal is transmitted using the same antenna port for a pair of $(n = 4m + 1)^{th}$ time interval and $(n = 4m + 3)^{th}$ time interval. In other cases, the assumption of the same antenna port is not applicable. For example, the same antenna port assumption may not be applied for $4m^{th}$ time interval and $(4m + 1)^{th}$ time interval.

Each block in FIG. 15 (b) means each time interval, and a UE may make the assumption of the same antenna port for the time intervals shown with the same shade.

If the assumption of the same antenna port is used, as shown in FIG. 15 (b), it is advantageous in that a form of optimizing the antenna port assumption is changeable depending on each coverage level. In case of $R_{AD} = 2$, a UE may obtain an antenna diversity gain by assuming that two time intervals use different antenna ports, respectively. In case of $R_{AD} = 4$, for a time interval pair of n = 0, 2 and a time interval pair of n = 1, 3, it is able to obtain both a combining gain through the same antenna port assumption and an antenna diversity gain through the different antenna port assumption respectively. For a case of $R_{AD} > 4$, a scheme of obtaining gains of two types in $R_{AD} = 4$ appears repeatedly.

Compared to the method of FIG. 15 (a), the method of FIG. 15 (b) differs in expecting an antenna diversity gain in unit of 1 time interval until the interval of $R_{AD} = 2$ only, and also expecting an antenna diversity gain in unit of 2 time intervals and a combining gain for a further length.

FIG. 15 (c) shows another embodiment of an antenna port assumption structure proposed in the present disclosure.

Referring to FIG. 15 (c), when a transmission of a WUS transmitted through N time intervals starts in (n = 0)$^{th}$ time interval, a UE may assume that a signal is transmitted using the same antenna port for a pair of (n = 4m)$^{th}$ time interval and (n = 4m + 3)$^{th}$ time interval when m ≥ 0 and that a signal is transmitted using the same antenna port for a pair of (n = 4m + 1)$^{th}$ time interval and (n = 4m + 2)$^{th}$ time interval. In other cases, the assumption of the same antenna port is not applicable. For example, the same antenna port assumption may not be applied for 4m$^{th}$ time interval and (4m + 1)$^{th}$ time interval.

Each block in FIG. 15 (c) means each time interval, and a UE may make the assumption of the same antenna port for the time intervals shown with the same shade.

If the assumption of the same antenna port is used, as shown in FIG. 15 (c), it is advantageous in that a form of optimizing the antenna port assumption is changeable depending on each coverage level. In case of $R_{AD}$ = 2, a UE may obtain an antenna diversity gain by assuming that two time intervals use different antenna ports, respectively. In case of $R_{AD}$ = 4, for a time interval pair of n = 0, 3 and a time interval pair of n = 1, 2, it is able to obtain both a combining gain through the same antenna port assumption and an antenna diversity gain through the different antenna port assumption respectively. For a case of $R_{AD}$ > 4, a scheme of obtaining gains of two types in $R_{AD}$ = 4 appears repeatedly.

Compared to the method of FIG. 15 (a), the method of FIG. 15 (c) differs in expecting an antenna diversity gain in unit of 1 time interval until the interval of $R_{AD}$ = 2 only, and also expecting an antenna diversity gain in unit of 2 time intervals and a combining gain for a further length. In addition, considering that the method of FIG. 15 (a) is unable to use the (n + 0)$^{th}$ time interval for the purpose of obtaining a combining gain, the method of FIG. 15 (c) differs in allowing it.

Additionally, when a transmission of a WUS transmitted through N time intervals starts in (n = 0)$^{th}$ time interval, a UE assumes that a signal is transmitted using the same antenna port only for a pair of (n = 2m)$^{th}$ time interval and (n = 2m + 1)$^{th}$ time interval when m ≥ 0 [not shown in the drawing]. In other cases, the assumption of the same antenna port is not applicable.

Alternatively, when a transmission of a WUS transmitted through N time intervals starts in (n = 0)$^{th}$ time interval, assuming that (n = 0)$^{th}$ time interval and (n = 1)$^{th}$ time interval can use antenna ports independent from each other, a UE may assume that a signal is transmitted using the same antenna port only for a pair of (n = 2m)$^{th}$ time interval and (n = 2m + 1)$^{th}$ time interval when m ≥ 0 [not shown in the drawing]. In other cases, the assumption of the same antenna port is not applicable.

The antenna port assumption structure described with reference to FIG. 15 may include Quasi Co-Located (QCL) or Quasi Co-Location (QCL) assumption structure for an antenna port. For example, each block in FIG. 15 (a) means each time interval, and a UE may make the same QCL assumption of antenna ports for the time intervals shown with the same shade. Each block in FIG. 15 (b) means each time interval, and a UE may make the same QCL assumption of antenna ports for the time intervals shown with the same shade. Each block in FIG. 15 (c) means each time interval, and a UE may make the same QCL assumption of antenna ports for the time intervals shown with the same shade. Likewise, antenna port assumption structures failing to be shown in the drawing may be interpreted as the QCL assumption structure.

## UE grouping and antenna port assumption

There may exist a plurality of UEs that expect a paging in one PO. A BS may determine the number of the paging-expecting UEs using SIB. In the present disclosure, a group of a plurality of UEs capable of expecting a paging in the same PO is described by being defined as a UE-group-per-PO.

In a legacy system, if there exists a WUS transmitted by targeting a specific PO, all the WUS capable UEs belonging to a UE-group-per-PO corresponding to the specific PO should perform the paging.

The paging may be transmitted by targeting some UEs among UEs belonging to the same UE-group-per-PO according to the determination of an MME or eNB. In the related art, since information indicating that a WUS and a paging are transmitted by targeting which UE among UEs belonging to the UE-group-per-PO is delivered through NPDSCH that carries traffic of the paging, some UEs may perform unnecessary NPDCCH/NPDSCH decoding.

Based on the above problem, the present disclosure may use UE subgrouping to reduce unnecessary paging monitoring operations of WUS capable UEs. A WUS capable UE may determine a WUS resource to monitor on a specific condition. WUS capable UEs monitoring the same WUS resource may belong to one UE subgroup.

So to speak, a UE subgrouping, which classifying a group (i.e., UE-group-per-PO) of UEs expecting a WUS by targeting the same PO into subgroups, may be performed.

An antenna port assumption may be made differently per UE subgroup. For example, antenna port assumption methods proposed through <Structure of Antenna Port Assumption> may be configured differently per UE subgroup. For example, the antenna port assumption of the structure corresponding to FIG. 15 (a) is applied to LTEs belonging to a first UE subgroup, and the antenna port assumption of the structure corresponding to FIG. 15 (b) is applied to UEs belonging to a second UE subgroup. Two or more UE subgroups may exist, and an antenna port assumption configured for each UE subgroup may have a different structure. Since an antenna port assumption structure may include a QCL structure for an antenna port, an antenna port assumption structure different per UE subgroup may be interpreted as a QCL assumption structure for an antenna port different per UE subgroup.

When there exist different UE subgroups sharing the same time/frequency resource as a WUS transmission resource, a BS may instruct an operation related to a WUS in each UE subgroup unit. For example, when a BS intends to exclude a UE subgroup that uses an antenna port assumption of a specific structure from instruction targets for the WUS related operation, the BS may transmit a signal using different antenna ports (or cover codes) for a time interval pair that use the same antenna port in the antenna port assumption of the specific structure used by the corresponding UE subgroup. In addition, when a BS intends to exclude a UE subgroup that uses a QCL assumption of a specific structure from instruction targets for the WUS related operation, the BS may transmit a signal by applying different QCLs to a time interval pair to which the same QCL is applied in the antenna port assumption of the specific structure used by the corresponding UE subgroup.

As a method of classifying a UE subgroup, a time interval (or period) level cover code for including UE subgroup information in a WUS is applicable. As described above, a time interval unit may include a subframe, slot and/or symbol group unit. If a time interval (or period) level cover code for including UE subgroup information in a WUS is applied, since a basic generation scheme of a predefined WUS is followed, it is advantageous in that the increase of complexity barely occurs in aspects of UE and BS implementation and signal generation. Particularly, if a time interval level cover code is applied, a signal detection process within one time interval is the same irrespective of a presence or non-presence of application of a cover code, a considerable gain can be obtained in aspect of complexity.

Specifically, for UE subgrouping, a cover code of $N_{cover}$ length is applicable in unit of $N_{cover}$ subframe(s) from a time interval in which the transmission of a WUS starts. If an actual transmission duration of the WUS is $N_T$, the WUS is applied in a manner that the same cover code is repeated $N_T/N_{cover}$ times.

In this case, a UE may assume that the same antenna port is used for the WUS during the time interval to which the cover code of minimum $N_{cover}$ length is applied to recognize a cover code. On the other hand, after the application of the cover code of the $N_{cover}$ length has ended, if the repetition of the cover code starts again, the antenna port for the WUS may be changed. The following description will be made in consideration of a general case. The same antenna port assumption of a signal/channel may be changed between different UEs, which may be determined by a capability difference of UE or a difference of configuration by a BS. Namely, a time, frequency, space and/or code domain resources in which an antenna port can be assumed as the same in a signal or channel transmitted duration (or interval) may be changed between UEs.

In case of the related art, a UE is unable to assume that a WUS transmitted in two consecutive subframes may be transmitted through the same antenna port. Since an assumption of the same antenna port is required during a time interval to which a cover code of $N_{cover}$ length is applied for the classification of a UE subgroup, a related art UE (e.g., a Rel-15 UE or a legacy UE) may recognize all per-UE subgroup WUSs are indications to itself. Hence, backward compatibility for a legacy WUS capable UE is satisfied.

Additionally, if a beam related operation is applied to a WUS, the WUS may have the same beam direction with other RS, SS, PDCCH, PDSCH and the like. The WUS may be configured to indicate whether to have the same beam direction with which signal/channel.

In particular, a WUS may have the spatially QCL relationship with other RS, SS, PDCCH, PDSCH and the like (in aspect of specific spatial Rx parameter).

In case that the large-scale property of a symbol carried channel on one antenna port is inferable from a symbol carried channel on another antenna port, the two antenna ports may be regarded as having QC/QCL relationship. Here, the large-scale property includes one or more of delay spread, Doppler spread, frequency shift, average received power, and receiving timing. As described above, the structure of the assumption related to the QCL relationship may be configured independently per UE subgroup.

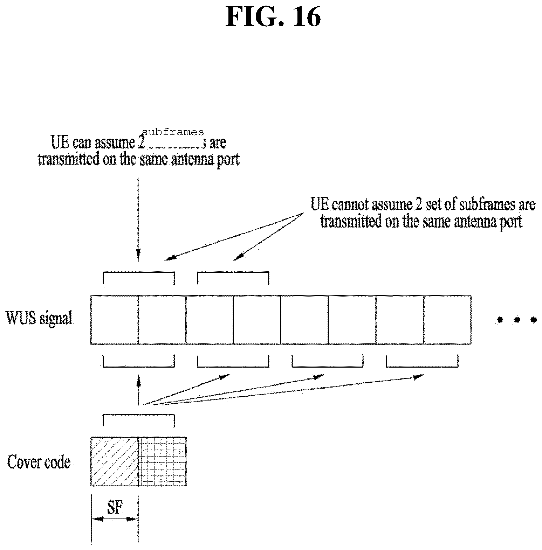

For one typical example, in case of $N_{cover}$ = 2, a UE may apply a cover code in unit of 2 time interval units from a time interval in which a transmission of a WUS starts. In this case, the number of available cover codes may be equal to the number of UE subgroups that can be classified and operated by a BS. FIG. 16 diagrammatizes one example of a structure of applying a cover code in 2 time interval units in case of $N_{cover}$ = 2 and applying the assumption of the same antenna port during 2 time intervals.

Options 1 to 4 below illustrate examples of specific cover code configurations in case that a length of a cover code is 2.

(Option 1) For example, in case of $N_{cover}$ = 2, a cover code may operate 2 UE subgroups using the form of an orthogonal cover code. If the two cover codes used in this example are $[S_{2n}, S_{2n+1}]$ and $[S_{2n}, S^*_{2n+1}]$, respectively, a UE determines whether the WUS relationship in a pair of two time intervals to which the cover code is applied meets the conjugate form, thereby confirming a UE subgroup index.

(Option 2) For example, it is able to consider a case of intending to operate 3 UE subgroup indicators when $N_{cover}$ = 2. In this case, since it is unable to represent all combinations with the conjugate relationship of signals, a cover code of a 2-dimensional vector form may be operated in a manner of performing a multiplication operation in time interval unit. In doing so, the cover code may use the forms of [1, exp($j2\pi/3 \cdot 0$)], [1, exp($j2\pi/3 \cdot 1$)], and [1, exp($j2\pi/3 \cdot 2$)], which may uniformly maximize the classification of the cover codes between UE subgroup indexes.

(Option 3) For example, it is able to consider a case of intending to operate 3 UE subgroup indicators when $N_{cover}$ = 2. In this case, since it is unable to represent all combinations with the conjugate relationship of signals, a cover code of a 2-dimensional vector form may be operated in a manner of performing a multiplication operation in time interval unit. In doing so, regarding the cover codes, two cover codes maintain orthogonal relationship with each other and the other one may have a $\pi/2$ deviation in its phase, and for example, such forms as [1, 1], [1, -1], and [1, exp($j\pi/2$)] may be used. Namely, the two cover codes in the orthogonal relationship may intend to maintain orthogonality for the purpose of independently indicating each UE subgroup and the other one cover code may be used to indicate 2 UE subgroups all.

(Option 4) For example, it is able to consider a case of intending to operate 4 UE subgroup indicators when $N_{cover}$ = 2. In this case, since it is unable to represent all combinations with the conjugate complex relationship of signals, a cover code of a 2-dimensional vector form may be operated in a manner of performing a multiplication operation in time interval unit. In doing so, the cover codes may use such forms as [1, exp($j2\pi/4 \cdot 0$)], [1, exp($j2\pi/4 \cdot 1$)], [1, exp($j2\pi/4 \cdot 2$)], and [1, exp($j2\pi/4 \cdot 3$)], whereby the classification of the cover codes between UE subgroup indexes can be uniformly maximized.

In case that such a cover code as Option 2 is used, two of three cover codes may be used for the purpose of classifying 2 UE subgroups and the other may be used for the purpose of a common indicator to give indication of information to all UEs that monitor a corresponding WUS transmission position.

In case that such a cover code as Option 3 is used, two cover codes (e.g., [1, 1] and [1, -1]) in orthogonal relationship may be used for the purpose of classifying 2 UE subgroups and the other may be used for the purpose of a common indicator to give indication of information to all UEs that monitor a corresponding WUS transmission position.

In case that such a cover code as Option 4 is used, two cover code pairs in orthogonal relationship may be used for the purpose of classifying 2 UE subgroups, another cover code may be used for the purpose of a common indicator to give indication of information to all UEs that monitor a corresponding WUS transmission position, and the other may be used for an Rel-15 WUS capable UE unable to support subgroup classification only. In case of a UE having capability of UE subgrouping WUS, using a cover code corresponding to a UE subgroup of the UE and a cover code for the purpose of a common indicator to give indication to all UEs, the UE may determine whether information is indicated to the UE itself.

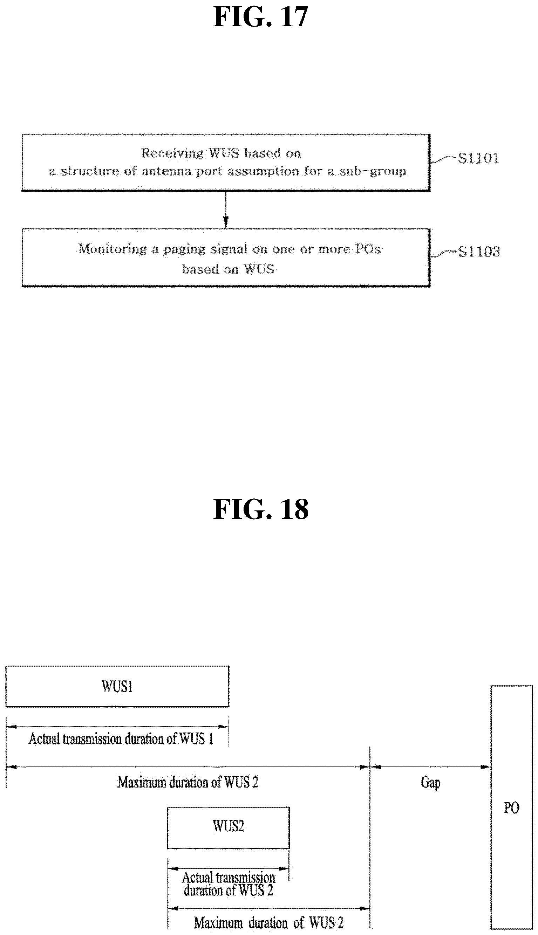

FIG. 17 is a flowchart for a signal receiving method according to an embodiment of the present disclosure.

Referring to FIG. 17, embodiments of the present disclosure is performed by a communication device and configured in a manner of including a step S1101 of receiving a WUS based on a first antenna port assumption structure and a step S1103 of monitoring a paging signal in one or more POs based on the WUS.

The first antenna port assumption structure is a pattern structure of time intervals in which a first communication device can assume the same antenna port for the WUS, and may be configured as one of the pattern structures described with reference to FIG. 15.

Specifically, one of:

- a first pattern structure of assuming a same antenna port for two consecutive time intervals except a first time interval having a WUS transmitted therein;
- a second pattern structure of assuming a same antenna port for first and third time intervals among four consecutive time intervals and also assuming a same antenna port for second and fourth time intervals;
- a third pattern structure of assuming a same antenna port for first and fourth time intervals among four consecutive time intervals and also assuming a same antenna port for second and third time intervals;
- a fourth pattern structure of assuming a same antenna port for two consecutive time intervals; and
- a fifth pattern structure of assuming independent antenna ports for first and second time intervals in which a WUS is transmitted and also assuming a same antenna port for subsequent two consecutive time intervals,

is available.

The first antenna port assumption structure is used by a first subgroup to which the first communication device belongs. In addition, the first antenna port assumption structure may be configured different from a second antenna port assumption structure used by a second subgroup to which a second communication device belongs. The first subgroup and the second subgroup belong to one group that monitors the same group. Namely, one or more POs are configured for the one group including the first and second subgroups.

A WUS for the first subgroup is transmitted through an antenna port matching the first antenna port assumption structure, a WUS for the second subgroup is transmitted through an antenna port matching the second antenna port assumption structure, and the two WUSs may be used by a third communication device unable to support classification of all subgroups in one group.

The first subgroup and the second subgroup may be classified in a manner of using a first cover code and a second cover code for the first subgroup and the second subgroup, respectively. The first cover code and the second cover code are in orthogonal relationship, a third cover code is used for all communication devices belonging to one group, and a fourth cover code may be used for the third communication device unable to support subgroup classification within one group.

In addition to the operation of FIG. 17, one or more of the operations described with reference to FIGs. 1 to 16 and the operations to be described with reference to FIGs. 18 to 27 may be additionally performed in combination.

Besides the method described above, various UE subgrouping methods are available. Hereinafter, UE subgrouping methods applicable to the present disclosure will be described.

### CDM based UE subgrouping

In the following, each of different UEs expecting a WUS on the same time/frequency resource may be classified through a WUS configured for a UE subgroup of its own. Alternatively, when transmissions of different WUSs overlap each other in aspect of time/frequency resource, the proposed method may be used to share or classify resources. Thus, the classification scheme using a WUS allows different WUSs to share a time/frequency resource entirely or in part, thereby reducing resource overhead.

The UE subgrouping through the classification of WUS may be applicable in a manner of combining one or more of the methods proposed below.

[Method 1-1] Method of including UE subgroup information in determining an initialization value of a scrambling sequence used for WUS generation

Method 1-1 proposes a method of using a scrambling sequence including UE subgroup information in generating a WUS. Since the proposed scheme follows a predefined basic generation scheme of WUS, it is advantageous in that the increase of complexity barely occurs in aspects of UE and BS implementation and signal generation.

As a typical example of Method 1-1, an initialization value of a scrambling sequence used for the generation of an NWUS (or MWUS) may be derived from Equation 8 to include UE subgrouping information. In Equation 8, $c_g$ is a parameter used to represent UE subgrouping information and may use one of more values of $\{0, 1, 2, 3\}$. Definitions of cell ID, $n_{f\_start\_PO}$, and $n_{s\_start\_PO}$ are as good as described with reference to Equations 5 to 7. It is advantageous in that the method of Equation 8 may add a sequence for UE subgrouping with almost no influence on a legacy UE by maintaining the sequence classification capability of a legacy WUS.

[Equation 8]

$$c_{\text{init\_WUS}} = c_g \cdot 2^{29} + (N_{ID}^{Ncell} + 1)\left(\left(10n_{f\_start\_PO} + \left\lfloor \frac{n_{s\_start\_PO}}{2} \right\rfloor\right) \bmod 2048 + 1\right)2^9 + N_{ID}^{Ncell}$$

As another typical example of Method 1-1, an initialization value of a scrambling sequence used for the generation of an NWUS (or MWUS) may be derived from Equation 9 to include UE subgrouping information. In Equation 9, $c_g$ is a parameter used to represent UE subgrouping information and may use one of more values of $\{0, 1, 2,..., 2^{11-\alpha}\}$. Here, $\alpha$ is a parameter for determining the number of UE subgroups and may use a preset value or include a value configured by higher layer signaling transmitted by a BS. Definitions of cell ID, $n_{f\_start\_PO}$, and $n_{s\_start\_PO}$ are as good as described through Equations 5 to 7. The method of Equation 9 may add information for UE subgrouping instead of reducing a quantity of information on a PO in a sequence of a legacy WUS. In this case, it is advantageous in that a total quantity of information represented using a scrambling sequence can be maintained identically.

[Equation 9]

$$c_{\text{init\_WUS}} = (N_{ID}^{Ncell} + 1)\left(\left(10n_{f\_start\_PO} + \left\lfloor \frac{n_{s\_start\_PO}}{2} \right\rfloor + c_g \cdot 2^\alpha + 1\right) \bmod 2048 + 1\right)2^9 + N_{ID}^{Ncell}$$

In Method 1-1, a portion of a UE subgrouping parameter may be used as a common indicator to represent information on the entire or a plurality of UE subgroups. For instance, in the examples of Equation 8 and Equation 9, $c_g = 0$ may be used to provide common information to all UEs that monitor a corresponding WUS transmission position. In Equation 8 and Equation 9, if $c_g = 0$, it has the same value as a scrambling sequence initialization value of a legacy WUS, whereby backward compatibility usable for awakening a Rel-15 UE is guaranteed. In case that $c_g$ is a different value except a constant used as a common indicator, a value of each $c_g$ is used to generate a scrambling sequence of a WUS configured per UE subgroup. Each UE may attempt detection of a WUS using $c_g$ of a UE subgroup to which the UE belongs and $c_g$ used as a common indicator. If succeeding in the detection of a WUS for which one of a plurality of $c_g$ values available for a UE is used at a specific WUS transmission timing, the UE performs an operation associated with the WUS.

[Method 1-2] Method of including UE subgroup information in a ZC sequence used for generation of a WUS

Method 1-2 proposes a method of generating a WUS in a manner of including UE subgroup information in generation of a ZC sequence. Since the proposed method follows the predefined basic generation scheme of a WUS, it is advantageous in that the increase of complexity barely occurs in aspects of UE and BS implementation and signal generation.

As one typical example of Method 1-2, an equation of generating a 'u' value necessary for $e^{-\frac{j\pi u n(n+1)}{131}}$ in Equation 5 corresponding to a ZC sequence used for the generation of an NWUS (or MWUS) may be configured as Equation 10 to include UE subgrouping information. In Equation 10, $c_g$ is a parameter used to represent UE subgrouping information and may use one or more values of $\{1, 2 \ldots \alpha\}$. Here, $\alpha$ is a parameter for determining the number of UE subgroups and may use a predetermined value or include a value configured by higher layer signaling transmitted by a BS. For example, $\alpha$ may have a value of 2 or 3. A cell ID may follow the former description. The method of Equation 10 may add information for the UE subgrouping purpose instead of reducing a quantity of information on Cell ID in an expression formula of a ZC sequence. In this case, information on Cell ID may be guaranteed through a scrambling sequence of a WUS.

$$[\text{Equation 10}]$$

$$u = (N_{ID}^{Ncell} \bmod 126) \cdot c_g / \alpha + 3$$

In Method 1-2, a portion of a UE subgrouping parameter may be used for the purpose of a common indicator to represent information on the entire or a plurality of LTE subgroups. For instance, in the example of Equation 8, $c_g = \alpha$ may be used to provide common information to all UEs that monitor a corresponding WUS transmission position. In the equation of Equation 10, if $c_g = \alpha$, it has the same expression as a ZC sequence of a legacy WUS. In this case, backward compatibility usable for the purpose of awakening a legacy UE is guaranteed. In case that $c_g$ is a different value except a constant of a common indicator purpose, a value of each $c_g$ is used to generate a ZC sequence of a WUS configured per UE subgroup. Each UE may attempt detection of a WUS using $c_g$ of a UE subgroup to which the UE belongs and $c_g$ used for the common indicator purpose. If succeeding in the detection of the WUS for which one of a plurality of $c_g$ values available for the corresponding UE is used at a specific WUS transmission timing, the corresponding UE performs an operation associated with the WUS.

[Method 1-3] Method of including UE subgroup information using an RE level cover code

Method 1-3 proposes a method of applying an RE level cover code to include UE subgroup information in a WUS. Since the proposed method follows the basic generation scheme of the predefined WUS, it is advantageous in that the increase of complexity barely occurs in aspects of UE and BS implementation and signal generation. In addition, through the classification by a cover code, the simultaneous blind detection of two or more informations can be performed without the increase of complexity in case that a UE performs signal detection after Fast Fourier Transform (, FFT) operation.

As one typical example of Method 1-3, it may be able to use a method of adding an RE level cover code to apply UE subgrouping to an NWUS (or MWUS). Here, the cover code may use a binary sequence $b_q(m)$ used for the generation of NSSS. In this case, one example of the a binary sequence $b_q(m)$ may be as good as shown in Table 7. Alternatively, the cover code may be used in a manner of applying the principle of the formula $\exp(-j\pi\theta_f n)$ for the application of the cyclic shift of NSSS in Equation 2.

In Method 1-3, a portion of a UE subgrouping parameter may be used as a common indicator to represent information on the entire or a plurality of UE subgroups. For example, if a cover code is used as Table 7, a binary sequence corresponding to $q = 0$ may be used for the purpose of all one sequence common indicator. For another example, if a cover code is used by applying the principle of the formula exp(-j$\pi\theta_f$n) for the application of the cyclic shift of NSSS in Equation 2, a case that a value of a cyclic shift is $\theta_f$= 0 may be used for the purpose of a common indicator. Through this, Method 1-3 guarantees the backward compatibility that may be usable for the purpose of awakening an Rel-15 UE.

[Method 1-4] Method of including UE subgroup information using OFDM symbol level cover code

Method 1-4 proposes a method of applying an OFDM symbol level cover code to include UE subgroup information in a WUS. Since the proposed method follows the basic generation scheme of the predefined WUS, it is advantageous in that the increase of complexity barely occurs in aspects of UE and BS implementation and signal generation. In addition, the OFDM symbol level cover code has an advantage that a UE can perform two or more blind detections simultaneously with low complexity even in a signal detection process that skips an FFT operation.

As one typical example of Method 1-4, it may be able to use a method of adding an OFDM symbol level cover code to apply UE subgrouping to an NWUS (or MWUS).

In Method 1-4, all one sequence may be used as a cover code for the purpose of representing information on the entire or a plurality of UE subgroups. In this case, when all one sequence is used, backward compatibility usable for the purpose of awakening an Rel-15 UE is guaranteed.

[Method 1-5] Method of including UE subgroup information by differentiating initialization values of a ZC sequence and/or a scrambling sequence used for generation of a WUS at the subframe level

Method 1-5 proposes a method of performing re-initialization of a ZC sequence or a scrambling sequence at a subframe level to include UE subgroup information in a WUS. Since the proposed method follows the basic generation scheme of the predefined WUS, it is advantageous in that the increase of complexity barely occurs in aspects of UE and BS implementation and signal generation. In addition, it is advantageous in that the proposed method may easily increase the number of expressible UE subgroups in a manner of applying to a case that the number of the expressible UE subgroups is limited due to the shortage of the number of ZC sequences and the scrambling initialization value.

As a typical example of Method 1-5, it is able to consider a method of periodically changing a value 'u' necessary for a formula $e^{-\frac{j\pi un(n+1)}{131}}$ corresponding to a ZC sequence used for the generation of an NWUS (or MWUS). Here, the period may be a value predetermined by the standard or a value configured by a BS. The period may be determined as $N_{S-SF1}$ subframes. Here, the ZC sequence of the WUS may be maintained identically in $N_{S-SF1}$ consecutive subframes of every period. For example, the $N_{S-SF1}$ value may be determined as 2. In addition, a reference for a start of the period may be determined as a starting subframe in which transmission of a WUS starts, and the calculation of $N_{S-SF1}$ may be determined as an absolute subframe (e.g., a subframe index calculated with reference to the time that has progressed, whether or not it is used for actual transmission). This may intend to determine that the same ZC sequence is used between subframes that use the same antenna port in consideration of the antennae port assumption of the WUS transmission defined in the legacy system, which may intend to facilitate coherent combining between subframes for which the same antenna port assumption is possible.

In the legacy system, the u value for determining the ZC sequence is designed to be determined by a cell ID only. In case that Method 1-5 is applied, the u value may be designed to reflect information of an absolute subframe together with information of cell ID. For example, the information of the absolute subframe may be determined as a value resulting from taking a modulo operation on an absolute subframe interval, which is spaced apart from a starting subframe of a WUS, with $N_{S-SF1}$.

As a typical example of Method 1-5, it is able to consider a method of periodically reconfiguring an initialization value of an NWUS (or MWUS). Here, the period may include a value predetermined by the standard or a value configured by a BS. The period may be determined as $N_{S-SF2}$ subframes. Here, the scrambling sequence of the WUS may have a continuous value in $N_{S-SF2}$ consecutive subframes of every period. In addition, a reference for a start of the period may include a subframe in which transmission of a WUS starts.

**TDM based UE subgrouping**

Described in the following is a scheme of using a WUS transmitted time resource for the purpose of UE subgrouping. In the proposed method, different UEs expecting a WUS on the same frequency resource can be classified by a WUS transmission interval determined based on a UE subgroup. If a TDM based method is used, since a WUS can be maintained identical to a legacy WUS to which UE subgrouping is not applied, it is advantageous in that the increase of complexity can be reduced in aspects of UE and BS implementation and signal generation. In addition, since the number of WUSs transmitted at the same timing is not increased, a size of power consumed for the transmission of a WUS can be maintained advantageously.

UE subgrouping through a transmission interval of a WUS is applicable in combination of one or more methods proposed below.

[Method 2-1] Method of independently indicating information on a WUS-to-PO gap (i.e., a gap between WUS and PO) to each UE subgroup

Method 2-1 proposes a method of indicating information on a gap for configuring a WUS transmitted position independently per UE subgroup. As the proposed method is a method of reusing the configuration scheme of a WUS of a legacy system, since a size of an applied gap is changed only in aspect of a UE, complexity may be reduced in aspect of implementation.

As a typical example of Method 2-1, it is able to consider a method of delivering gap indication information independent per UE subgroup using SIB or higher layer signaling such as RRC signaling. A UE may acquire information of a gap size fitting a UE subgroup of its own through higher layer signaling and then determine a WUS transmission interval for which the UE will monitor a WUS in a manner of reflecting the acquired information. For example, when a size of a gap configurable by a BS is {40 ms, 80 ms, 160 ms, 240 ms}, each UE subgroup may be configured to use a value of one of the 4 kinds of gaps. In this case, sizes of gaps allocated to the UE subgroups respectively may overlap each other.

[Method 2-2] Method of determining a WUS-to-PO gap in combination of a common gap value and a UE subgroup specific offset

Method 2-2 proposes a method of indicating information on a gap for configuring a WUS transmitted position as common information for all UE subgroups and applying a size of an actual gap applied per UE subgroup by combining a UE subgroup specific offset. As the proposed method is a method of reusing the WUS configuration scheme of the legacy system, since a size of an applied gap is changed only in aspect of a UE, complexity may be reduced in aspect of implementation.

As a typical example of Method 2-2, it is able to consider a case that a gap between an ending subframe of a maximum duration of a WUS and a PO is cell-commonly (or by reference independent from a UE subgroup, e.g., common per carrier, common per narrowband, etc.) indicated using SIB or higher layer signaling such as RRC signaling.

In this case, a size of a UE subgroup specific offset designated per UE subgroup may be configured independently per UE subgroup using SIB or higher layer signaling such as RRC signaling. A UE may acquire information of an offset fitting a UE subgroup of its own through higher layer signaling and then determine a WUS transmission interval for which the UE will monitor a WUS in a manner of reflecting the acquired information. For example, the relationship between an ending subframe position $g_0$ of a maximum WUS duration, which is calculated using a gap calculated using the above-described method, and $n_{PO}$ that is a position (PO) at which the transmission of paging NPDCCH starts may be expressed as such an equation as Equation 11. In Equation 11, $L_{common}$ means a size of a gap configured in common to all UE subgroups and $L_{group,i}$ means a size of an offset configured by targeting an $i^{th}$ UE subgroup. If a size of a gap configured in common to all UE subgroups in Equation 11 is a size of a gap configured for a legacy WUS capable UE and $L_{group,i} = 0$, $g_0$ represents an ending subframe of a maximum WUS duration of a legacy system.

[Equation 11]

$$g_0 = n_{PO} - \left( L_{common} + L_{group,i} + 1 \right)$$

Alternatively, in this case, a size of a UE subgroup specific offset designated per UE subgroup may be determined in form of a function of combining a size of an offset determined in predetermined size and a UE subgroup index together. In this case, since a UE can be aware of a size of an offset applied to a UE subgroup to which the UE belongs without separate signaling, overhead can be reduced advantageously. For example, the relationship between an ending subframe position $g_0$ of a maximum WUS duration, which is calculated using a gap calculated using the above-described method, and $n_{PO}$ that is a position (PO) at which the transmission of paging NPDCCH starts may be expressed as such a formula as Equation 12. In Equation 12, $L_{common}$ means a size of a gap configured in common to all UE subgroups, $L_{group}$ means a size of an offset set to a predetermined size, and $c_g$ is an integer value that means a UE subgrouping parameter configured by targeting a specific UE subgroup. If a size of a gap configured in common to all UE subgroups in Equation 12 is a size of a gap configured for a legacy WUS capable UE and $c_g = 0$, $g_0$ represents an ending subframe of a maximum WUS duration of a legacy system.

[Equation 12]

$$g_0 = n_{PO} - \left(L_{common} + L_{group} \cdot c_g + 1\right)$$

[Method 2-3] Method of generating a scrambling sequence of a WUS in consideration of a TDM structure

Method 2-3 proposes a method of if a plurality of transmission positions of a WUS corresponding to one PO exist, using a same reference timing point for a scrambling sequence generation rule of WUSs at different WUS transmission positions. If transmission intervals of WUSs having different transmission starting points overlap each other, it may intend to guarantee the transmissions of all overlapping WUSs without a collision problem. Although the proposed method may be applicable to a WUS transmission interval overlapping problem in a UE subgrouping structure using TDM, it is obvious that the proposed method is generally applicable to an overlapping problem between WUSs having different transmission positions while indicating information on the same PO.

As a typical example of Method 2-3, the generation rule of a scrambling sequence may be designed to apply to a plurality of WUSs having different transmission intervals with reference to the same timing point while indicating information on the same PO. For example, when a subframe in which the transmission of UE subgroup-1 starts and a subframe in which the transmission of UE subgroup-2 starts are spaced apart from each other by $n_{diff}$ WUS transmittable subframes, both of the UE subgroup-1 and the UE subgroup-2 may apply the generation rule of the scrambling sequence with reference to the subframe in which the transmission of the UE subgroup-1 starts.

Regarding the following description with reference to Equation 5 for the generation of an NWUS (or MWUS), the scrambling sequence generation rule of the UE subgroup-1 may be defined to follow the generation rule of a legacy system, and the scrambling sequence generation rule of the UE subgroup-2 may be defined to start after counting an index of a scrambling sequence usable for $n_{diff}$ WUS transmission capable subframes.

Method 2-3 represents the typical example in form of an equation. In Method 2-3, $c_{init\_WUS,i}$ means an initialization value of a scrambling sequence of an $i^{th}$ UE subgroup and $c_{init\_WUS,0}$ means an initialization value of a scrambling sequence of a reference timing point. $N_{WUS\_RE}$ means the number of REs to which a WUS sequence is mapped with reference to a single subframe. And, $n_{diff,i}$ means the number of subframes usable for the purpose of WUS transmission until a point at which WUS transmission of an $i^{th}$ UE subgroup starts after a reference timing point. In this case, if the WUS transmission of the $i^{th}$ UE subgroup precedes the reference timing point, $n_{diff,i}$ may be represented as a negative value.

[Equation 13]

$$c_{init\_WUS,i} = c_{init\_WUS,0} + N_{WUS\_RE} \cdot n_{diff,i}$$

[Method 2-4] Method of reinitializing a scrambling sequence if a transmission of another WUS starts within a transmission interval of a specific WUS

Method 2-4 proposes a method of if a plurality of transmission positions of a WUS corresponding to one PO exist, reinitializing a scrambling sequence at a starting subframe position of a WUS transmission in which a WUS transmission interval of a relatively advanced timing point is relatively late. Namely, if transmission intervals of WUSs having different transmission start points overlap each other, it may intend to guarantee the transmission of all overlapping WUSs without a collision problem. Although the proposed method may be applicable to a WUS transmission interval overlapping problem in a UE subgrouping structure using TDM, it is obvious that the proposed method is generally applied to an overlapping problem between WUSs having different transmission positions while indicating information on the same PO.

As a typical example of Method 2-4, while indicating information on the same PO, a BS may determine that a UE should obtain all information on transmission starting positions of a plurality of WUSs having different transmission intervals through SIB or higher layer signaling such as RRC signaling and perform re-initialization of a scrambling sequence used for transmission of a WUS at every transmission starting timing point existing in the transmission interval of the WUS. In this case, re-initialization of a scrambling sequence may be skipped at a transmission start timing point for another PO.

Regarding the following description of the proposed scrambling sequence with reference to an NWUS (or MWUS), a UE may initialize a scrambling sequence of a WUS to monitor with reference to a transmission starting timing point of a UE subgroup to which the UE belongs, count scrambling sequence indexes by accumulating them while repetition of a subframe level is in progress, initialize scrambling sequence indexes at WUS transmission starting subframe positions of a plurality of UE subgroups sharing the same PO, and restart a scrambling sequence with the first initialization value.

[Method 2-5] Method of configuring a maximum WUS duration different per UE subgroup

Method 2-5 proposes a method that a maximum WUS duration applied per UE subgroup is configured different per UE subgroup. The proposed method is advantageous in that when transmissions of WUSs for UEs in different coverages are classified by TDM, it can be configured without the increase of a time domain resource necessary for the transmission of the WUS. Particularly, when Method 2-5 is used in combination with Method 2-3 and/or Method 2-4, it is advantageous in that UEs of several UE groups can be simultaneously instructed using the same WUS.

In case of applying Method 2-5, as one example of a reference for classifying a UE group, it may be able to use a capability (e.g., enhanced coverage restricted UE) of determining whether a UE camps on a cell in an enhanced coverage state. The capability is the information that can be delivered to a BS from an MME and does not change according to time, whereby it is profitable in that the capability can be equally understood by the BS and the UE.

As a typical example of Method 2-5, it is able to consider a method of configuring a maximum WUS duration different for each UE subgroup using SIB or higher layer signaling such as RRC signaling. This may intend to support a different coverage for each UE subgroup.

In this case, a size of a used WUS-to-PO gap may be determined to enable all UE subgroups to acquire the common information using the same higher layer signaling. In doing so, each UE subgroup may have a different WUS starting subframe like the example of FIG. 18 due to a common gap and a different maximum WUS duration. Like the example of FIG. 18, a UE subgroup expecting a WUS2 in general may be provided for the purpose of UEs having a low coverage level (or UEs capable of WUS detection with short repetition owing to a high SINR of a channel) in comparison to a UE subgroup expecting a WUS 1. In case that the proposed method is used, it is advantageous in reducing an operation that the UEs expecting the WUS2 wake up unnecessarily due to the transmission of the WUS1.

As one typical example of Method 2-5, it is able to consider a method of separately configuring a scaling factor to determine a maximum duration of a WUS using SIB or higher layer signaling such as RRC signaling. For example, when a maximum WUS duration of a WUS is expressed as a multiplication of an Rmax, which is a parameter to determine a repetition level of a paging NPDCCH, and a scaling factor, a BS may configure independent scaling factors for UEs that use maximum WUS durations in different sizes and then inform the UEs of the configured factors. The UE may select a scaling factor corresponding to its UE group from the scaling factors received from the BS and then perform a monitoring operation of a WUS. If this method is used, since additional UE grouping for the WUS is performed while the definition and operation for the legacy paging are maintained, influence on a legacy UE can be reduced advantageously.

As another typical example of Method 2-5, it is able to consider a method of separately configuring an Rmax value to determine a repetition level of a paging NPDCCH used by a UE using SIB or higher layer signaling such as RRC signaling. For example, when a maximum WUS duration of a WUS is expressed as a multiplication of an Rmax, which is a parameter to determine a repetition level of a paging NPDCCH, and a scaling factor, a BS may configure an independent Rmax value for UEs that use maximum WUS durations in different sizes and then inform the UEs of the configured value. The UE may select a scaling factor corresponding to its UE group from the scaling factors received from the BS and then perform a monitoring operation of a WUS. If this method is used, it is advantageous in that LTEs expecting a WUS of a short duration may be made to expect a paging of a short duration only likewise.

An actual transmission duration of a paging NPDCCH may be short in comparison to Rmax, and information indicating an actually and repeatedly transmitted duration of the paging NPDCCH is included in a DCI format transmitted through the paging NPDCCH. A UE may estimate a timing point of an actual end of the transmission of the paging NPDCCH with reference to the information included in the DCI with reference to the Rmax value, and obtain a starting timing point of a transmission of NPDSCH using the estimated timing point. Yet, like the example of the proposed method, in case that UEs of different UE groups expect Rmax values in different sizes, a transmission ending point of NPDCCH and an NPDSCH transmission starting point, which are understood per UE, may be different from each other. In case that UEs sharing the same PO use different Rmax values, simultaneous scheduling of two groups may be restricted. To solve such a problem, even if different Rmax values are used for the different UE groups expecting the paging for the same PO, an Rmax value used in common by all UE groups may be determined as a single value in the process for calculating an ending timing point of transmission of NPDCCH. For example, with reference to an Rmax value for supporting a legacy UE incapable of classification for UE grouping, the above calculation may be designed to be executed. This may intend to maintain the probability for a legacy UE to receive a paging. Alternatively, by taking a biggest Rmax among different Rmax values as a reference all the time, the above calculation may be designed to be executed. In case that different Rmax values are used, it may be intended to support the very last timing point at which NPDCCH may be ended.

[Method 2-6] Method of configuring a skipping WUS duration different per UE subgroup

Method 2-6 proposes a method that a skipping WUS duration applied per UE subgroup is configured differently per UE subgroup. The skipping WUS duration is defined as an interval in which a UE skips the monitoring of a WUS and may be applied from a starting subframe of WUS transmission. The proposed method is advantageous in that it can be configured without the increase of a time domain resource necessary for transmission of a WUS when the transmission of the WUS for UEs in different coverages is classified by TDM. Particularly, when Method 2-6 is used in combination with Method 2-3 and/or Method 2-4, it is advantageous in simultaneously giving indication to UEs of several UE groups using the same WUS.

As one typical example of Method 2-6, it is able to consider a method of configuring a skipping WUS duration different for each UE subgroup using SIB or higher layer signaling such as RRC signaling. This may intend to support a different coverage for each UE subgroup.

As another typical example of Method 2-6, it may be able to use a method of using an enhanced coverage restricted parameter. When a UE reports restriction of an enhanced coverage in an Attach/TAU Request step and receives configuration in an enhanced coverage restricted state through a higher layer of an Attach/TAU Accept step (i.e., if a value of an enhanced coverage restricted parameter RestrictEC is 1), only if the UE generally stays in normal coverage, both of the BS and UE may identically expect that the UE will attempt transmission and reception in a corresponding cell. Therefore, the BS and UE may assume the information on the coverage of the corresponding UE similarly. Particularly, an enhanced coverage restricted parameter may be used to classify a UE having an enhanced coverage restricted parameter RestrictEC configured as 1 and other UEs and support an operation of a separate coverage based grouping for UEs in the enhanced coverage restricted state. The specific method may be used identically for the purpose of performing the UE classification based on the coverage in the method of Method 2-5.

In doing so, a size of a WUS-to-PO gap to be used and a size of a maximum WUS duration may be designed to enable all UE subgroups to acquire common information using the same higher layer signaling. For example, sizes of a gap and maximum WUS duration configured for a legacy WUS capable UE failing to have UE subgrouping capability may be usable as common information shared by all UE subgroups.

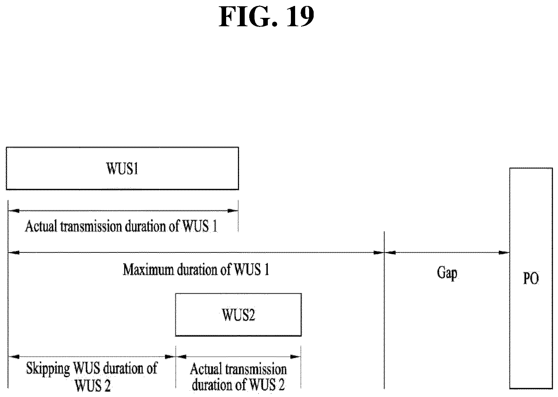

Here, in case of a legacy WUS capable UE failing to have UE subgrouping capability or a UE failing to have a skipping WUS duration configured therefor, a starting subframe of a WUS may be calculated as a combination of a gap value and a maximum WUS duration. In case that a UE is capable of UE subgrouping and has a skipping WUS duration configured therefor, a subframe located behind the skipping WUS duration from the subframe calculated as the combination of a gap value and a maximum WUS duration may be set as a starting subframe of a WUS. FIG. 19 diagrammatizes the proposed method. In case of using the proposed method, it is advantageous in reducing an operation that UEs expecting WUS2 wake up unnecessarily due to the transmission of WUS1.

Method 2-6 may be interpreted as a method that an actual transmission duration for a UE to perform a monitoring is applied differently depending on the classification according to a coverage state of a UE. For example, general UEs may perform monitoring of a WUS at a position from which a maximum WUS duration starts according to the definition of an actual transmission duration according to the related art. And, in case of UEs designated to perform a normal coverage operation (e.g., UEs having a value of an enhanced coverage restricted parameter RestrictEC configured as 1), all candidates of an actual transmission duration may start from a middle section of a maximum WUS duration.

[Method 2-7] Method of determining a WUS ending(/starting) subframe of a specific UE subgroup as a position associated with a WUS starting(/ending) subframe of another UE subgroup

Method 2-7 proposes a method that a position of an ending subframe in which a WUS transmission of a specific US subgroup may end is determined as a position relative to a starting subframe in which a WUS transmission of another UE subgroup starts. On the contrary, it may be able to use a method that a position of a starting subframe in which a WUS transmission of a specific US subgroup starts is determined as a position relative to an ending subframe in which a WUS transmission of another UE subgroup may end. Method 2-7 is advantageous in preventing an overlapping problem between TDMed WUSs as well as having a low overhead necessary for signaling.

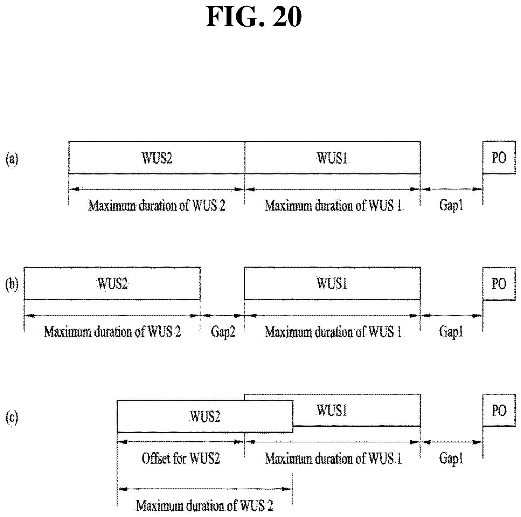

As one typical example of Method-TDM-7, as shown in FIG. 20 (a), an ending subframe of a maximum WUS duration of a specific UE subgroup may match a WSU starting subframe of another UE subgroup. In this case, as shown in the example of FIG. 20 (a), if a starting subframe of WUS 1 is determined through a gap 1 and a maximum duration of WUS 1, a starting subframe of WUS2 may be determined through the starting subframe of the WUS 1 and a maximum duration of the WUS2. In case of using such a method as shown in FIG. 20 (a), it is advantageous in that a separate overhead for designating a starting subframe of a WUS per UE subgroup does not occur and that unnecessary resource waste can be prevented owing to the absence of a gap between the WUS1 and the WUS2.

As another typical example of Method 2-7, as shown in FIG. 20 (b), an ending subframe of a maximum WUS duration of a specific UE subgroup may be determined as a position spaced apart from a WUS starting subframe of another UE subgroup by a gap in predetermined size. In this case, as shown in the example of FIG. 20 (b), if a starting subframe of WUS1 is determined through a gap 1 and a maximum duration of WUS 1, a starting subframe of WUS2 may be determined through the starting subframe of the WUS 1, a maximum duration of the WUS2 and a gap 2. An object of an interval of the gap 2 may be to solve a problem of interference that may be caused by adjacent transmission positions of different WUSs. For example, if a UE has a mismatch of timing synchronization in a DRX interval, it may be intended to prevent unnecessary power consumption by detecting a transmission of a WUS for another UE subgroup of an adjacent subframe. Here, a size of the gap 2 may include a value predefined in the standard or a value signaled through SIB or higher layer signaling such as RRC signaling.

As further typical example of Method 2-7, as shown in FIG. 20 (c), a starting subframe of a maximum WUS duration of a specific UE subgroup may be set to a position spaced apart from a WUS starting subframe of another UE subgroup by an offset over a predetermined size. In this case, as shown in the example of FIG. 20 (c), if a starting subframe of WUS 1 is determined through a gap 1 and a maximum duration of WUS 1, a starting subframe of WUS2 may be determined using the starting subframe of the WUS1 and an offset value for the WUS2. In this case, if a size of the offset is smaller than a maximum duration of WUS2, the maximum durations of the WUS1 and WUS2 may overlap each other in part. This may intend to reduce a size of a time domain resource consumed in performing subgrouping of WUS through TDM. A size of the offset may include a value predetermined by the standard, which may intend to fix the consumption of the time domain resource due to TDM without generating separate signaling overhead. Alternatively, the size of the offset may be expressed as a function for maximum duration of a WUS or the maximum repetition number Rmax of the paging NPDCCH. For example, the size of the offset may be determined as a rate for the maximum duration (or Rmax) value of the WUS. This may intend to support WUSs of various durations while a rate of the overlapping section of WUSs of different TDMed UE subgroups is maintained at a predetermined level. Here, the rate may include a value predetermined by the standard or a value indicated by higher layer signaling such as RRC signaling.

## FDM based UE subgrouping

For the purpose of UE subgrouping, a UE subgroup classification scheme using a frequency resource for transmitting a signal of a WUS may be available. In the proposed method, different UEs expecting a WUS on the same time resource can be classified by a WUS transmission position determined based on a UE subgroup. If an FDM based method is used, since a WUS can be maintained identical to a legacy WUS to which UE subgrouping is not applied, it is advantageous in that the increase of complexity can be reduced in aspects of UE and BS implementation and signal generation. In addition, in case that PRBs exist in NarrowBand (NB) not used at a transmission timing point of an MWUS like MTC, it is advantageous in increasing use efficiency of a frequency resource by reutilizing them.

The methods described in the following proposals are applicable to an FDM scheme that considers both a legacy WUS for UEs to which UE subgrouping is not applied and UE subgroup WUSs for UEs to which UE subgrouping is applied, or may be usable for the purpose of selecting a frequency domain resource of a UE subgroup WUS even if such a scheme as TDM and the like is applied between a legacy WUS and a UE subgroup WUS.

UE subgrouping through a transmission position of a WUS may be applicable in a manner of combining one or more methods proposed below.

[Method 3-1] UE subgrouping method using a position of a frequency resource used for mapping of a WUS

Method 3-1 proposes a method of classifying UE subgroup information using a position of a frequency resource used for mapping of a WUS. Since the proposed method reuses a legacy WUS (particularly, MWUS), it is advantageous in that implementation complexity of a UE for signal detection can be maintained.

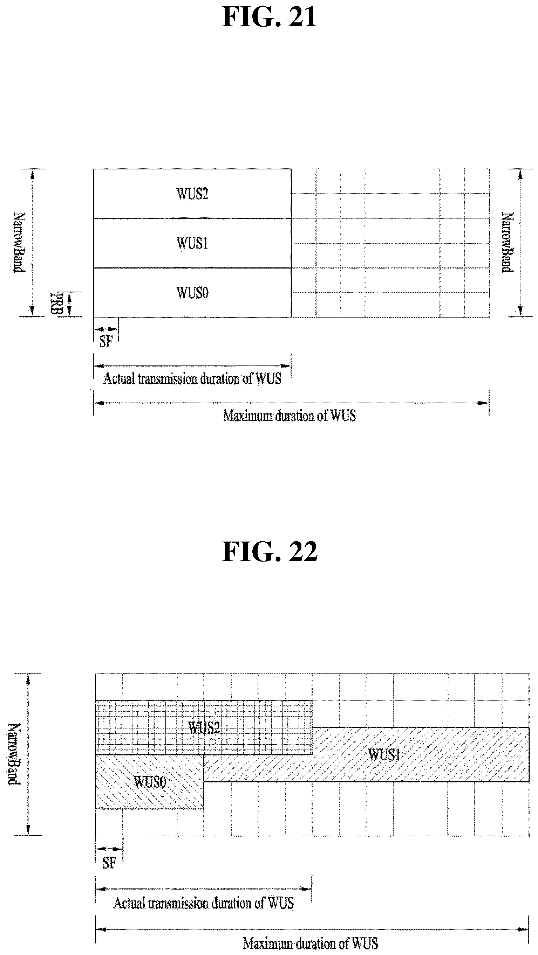

As one typical example of Method 3-1, regarding a PRB position within a narrowband to which an MWUS is mapped, as shown in FIG. 21, a narrowband may be divided into 3 zones in unit of 2 PRBs and the 3 zones may be then divided for each UE subgroup. This may intend to obtain a UE subgrouping effect by transmitting an additional MWUS while reusing the frequency resource allocation scheme of a legacy MWUS as it is. More specifically, an index of a starting PRB to which an MWUS per UE subgroup is mapped may include one value selected from {0, 2, 4}.

As another typical example of Method 3-1, regarding a PRB position within a narrowband to which a defined MWUS is mapped, as shown in FIG. 22, a narrowband may be divided for each UE subgroup in a manner of indicating a starting PRB in unit of 1 PRB. This may further increase the number of UE subgroups. For example, in case of classifying a WUS by an interval of 2 PRBs, the maximum number of operable UE subgroups is 3. Yet, according to the proposed method, maximum 5 starting PRBs may be operated. In addition, a size of a full PRB bandwidth on which a WUS is transmitted is decreased by generating a PRB region shared between WUSs, by which an effect of power boosting may be further facilitated. For example, in case of operating 3 WUSs, as shown in FIG. 22, total 4 PRBs are used, whereby 2 PRBs are saved in comparison to the configuration scheme of a legacy MWUS.

As a typical example of Method 3-1, a PRB position within a narrowband to which an MWUS is mapped may be explicitly configured for each UE subgroup through an SIB or higher layer signal such as RRC signaling. Here, a PRB position information provided through the higher layer signaling may include information of a starting PRB to which a WUS is mapped.

Alternatively, as a typical example of Method 3-1, a PRB position within a narrowband to which an MWUS is mapped may be determined implicitly by UE subgrouping. A WUS per UE subgroup is mapped with reference to a predetermined starting PRB index, and a UE may be aware of PRB information of a WUS, which is to be transmitted to the UE, using a UE subgrouping index to which the UE belongs. When this method is used, a BS may determine the number of UE subgroups to operate and inform UEs of this information through SIB or higher layer signaling such as RRC signaling. If such information exists, the UE may be aware of starting PRB information of a WUS, which is to be monitored by the UE, using a UE subgrouping starting PRB determining method predetermined by the standard and the number of UE subgroups in a narrowband.

If a transmission PRB of a WUS is determined implicitly, a WUS PRB used by a legacy WUS capable UE having no UE subgrouping capability may be used by UE subgrouping capable UEs. A UE subgrouping capable UE may check WUS starting PRB allocation information configured for a legacy UE through SIB or RRC signaling, and may exclude a corresponding position from an available list of its WUS starting PRB. Through this, UE subgrouping incapable UEs may be prevented from obtaining incorrect information due to a WUS for a subgrouping capable UE. A BS may transmit a signaling indicating whether a resource of a legacy WUS is usable together in a manner of including the signaling in WUS configuration information. UE subgrouping applied UEs may determine whether the legacy WUS resource is usable, using the above information.

As another typical example of Method 3-1, a PRB position within a narrowband to which an MWUS is mapped may be determined using a position of a common starting PRB and information on a relative offset per UE subgroup. In this case, a UE determines a starting PRB position of a WUS, on which the UE will perform monitoring, by combining information of an offset corresponding to a UE subgroup to which the UE belongs and information of a common starting PRB.

The information on the offset may be explicitly configured by a BS using SIB or higher layer signaling such as RRC signaling. Alternatively, a UE may be aware of the information on the offset implicitly using a UE subgroup index and/or the number of UE subgroups operated in a narrowband.

In this case, regarding a position of a starting PRB, a PRB having a WUS transmitted thereon should be included in the narrowband entirely. For example, when a position of a WUS PRB is set as shown in FIG. 21, a position of a starting PRB may be determined by Equation 14. Here, $f_i$ means a starting PRB of an $i^{th}$ UE subgroup, $f_0$ means a starting PRB of a legacy UE (e.g., a Rel-15 MWUS capable UE), and $f_{offset,i}$ means an offset value of an $i^{th}$ UE subgroup.

$$[\text{Equation 14}]$$

$$f_i = \left( f_0 + f_{offset,i} \right) \bmod 6$$

If a size of the offset is implicitly determined and the maximum number of UE subgroups that can be FDMed is 2, the size $f_{offset,i}$ of the offset may be determined within the set of {0, 2} or {0, -2}. This may intend to prevent the occurrence of simultaneous WUS transmission that exceeds 4 PRBs within a single narrowband despite applying a UE subgrouping WUS of an FDM scheme.

In this case, a size $f_{offset,i}$ of the offset, which is used if there is a single FDM resource of a UE subgroup (i.e., if an FDM scheme is used for the purpose of classifying a legacy WUS and a UE subgroup WUS only and the same PRB pair is used between UE subgroup WUSs), may be set to 2 or -2. Namely, when the number of small-size UE subgroups is configured, a legacy WUS and a UE subgroup WUS are FDMed to each other, thereby avoiding each other's effects.

In this case, a size $f_{offset,i}$ of the offset, which is used if there is a single FDM resource of a UE subgroup (or, if an FDM scheme is used for the purpose of classifying a legacy WUS and a UE subgroup WUS only and the same PRB pair is used between UE subgroup WUSs), may be set to 0. Through this, EPRE of a WUS can be raised by minimizing the number of PRBs necessary for transmission of a WUS.

In this case, a size set of offsets configurable for a UE in DRX state and a size set of offsets configurable for a UE in eDRX state may be become different from each other. For example, an offset size $f_{offset,i}$ may be allocated to a UE in DRX state within a set of {0, 2}, but an offset size $f_{offset,i}$ may be allocated to a UE in eDRX state within a set of {0, -2}. Through this, when a WUS-to-PO gap of a DRX UE and a WUS-to-PO gap of an eDRX UE are equal to or adjacent to each other, WUSs for the two UEs may be transmitted respectively or simultaneously. The same method by the same principle may be applicable to another situation (e.g., a case that both an eDRX long gap and an eDRX short gap are supported) that WUS-to-PO gaps in different sizes corresponding to the same PO can be configured.

[Method 3-2] Method of dividing a frequency resource used for mapping of legacy WUS and using it for UE subgrouping

Method 3-2 proposes a method of classifying UE subgroup information using a partial frequency resource of a legacy WUS (or a UE subgrouping incapable WUS (i.e., a Not UE subgrouping capable WUS)) for mapping of a WUS. Since a PRB resource of a legacy MWUS is reusable identically, the proposed method is advantageous in that a transmission power level of an MWUS can be maintained greater than or equal to the existing one.

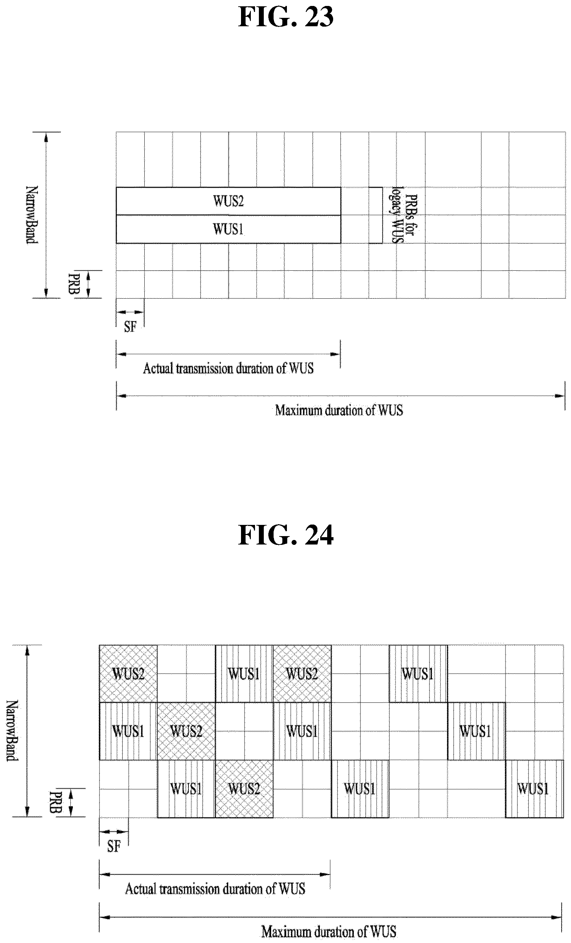

As a typical example of Method 3-2, it is able to use a method of dividing 2 consecutive PRBs to which a legacy MWUS is mapped into two 1-PRB regions, as shown in FIG. 23, and then allocating them to each UE subgroup. In this case, a UE may estimate a position of a PRB, which matches a UE subgroup of the UE, using such a formula as Equation 15. Here, $f_{subgroup1}$ and $f_{subgroup2}$ mean PRB indexes in a narrow band used by the subgroups, respectively, and $f_0$ means a starting PRB of a legacy UE (e.g., a Rel-15 MWUS capable UE).

A BS may explicitly configure PRB allocation information of a WUS that a UE will monitor using SIB or higher layer signaling such as RRC signaling. Alternatively, a UE may be implicitly aware of PRB allocation information of a WUS that a UE will monitor using a UE subgroup index.

The proposed method has an advantage that the number of PRBs used due to a WUS can be identically maintained in comparison with a legacy WUS. In addition, a BS may use the same PRB as a legacy WUS only in transmitting a common WUS for both of a legacy UE and a UE subgroup capable UE.

$$[\text{Equation 15}]$$

$$\begin{cases} f_{\text{subgroup1}} = f_0 \\ f_{\text{subgroup2}} = f_0 + 1 \end{cases}$$

[Method 3-3] Method of using a different frequency hopping pattern for each UE subgroup

Method 3-3 proposes a method of generating a frequency hopping pattern in PRB unit of a WUS using UE subgroup information. Here, one object of frequency hopping may be to obtain frequency diversity. In addition, another object of the frequency hopping may be to classify different UE subgroups. The proposed method is advantageous in obtaining a diversity gain through frequency hopping and reducing interference occurring between different cells.

As a typical example of Method 3-3, it is able to use a method of applying hopping in PRB unit, as shown in FIG. 24, to a PRB to which an MWUS is mapped. In the example of FIG. 24, a WUS transmission starts per UE subgroup from a different PRB and hopping in PRB unit is performed according to time within a WUS transmission duration.

As a specific method, a PRB used at a starting timing point of a transmission of a WUS (i.e., a reference PRB from which PRB hopping starts) may be determined by a UE subgroup index. Through this, different UE subgroups may be classified in frequency domain.

As a specific method, a PRB hopping pattern of a WUS may be determined as a function by a UE subgroup index, and different UE subgroups may have different PRB hopping patterns, respectively.

Alternatively, as a typical example of Method 3-3, a PRB to which an MWUS is mapped may use a hopping pattern in narrowband unit operated in a full cell bandwidth.

## CDM + TDM based UE subgrouping

For the purpose of UE subgrouping, a UE subgroup classification scheme using a WUS and a UE subgroup classification scheme using a WUS transmitted time resource may be used in combination. In the proposed method, each of different UEs expecting the same WUS may be classified through a WUS configured for its own UE subgroup and a time domain resource on which a WUS is transmitted.

UE subgrouping through WUS classification may be used in a manner of combining one or more of the methods proposed below.

[Method 4-1] Method of adding a section of an additional actual transmission duration in case of a UE subgroup capable UE by including UE subgroup information through classification of a WUS

Method 4-1 proposes a method of performing UE subgrouping in a manner of designing UE subgroup information to be included in generating a WUS and adding an actual transmission duration section. The proposed method is advantageous in scheduling multiple UEs simultaneously as well as reutilizing a legacy WUS resource.

As a typical example of Method 4-1, a generation scheme of a WUS may be used in a manner of combining one or more of the methods proposed in <CDM based UE subgrouping>.

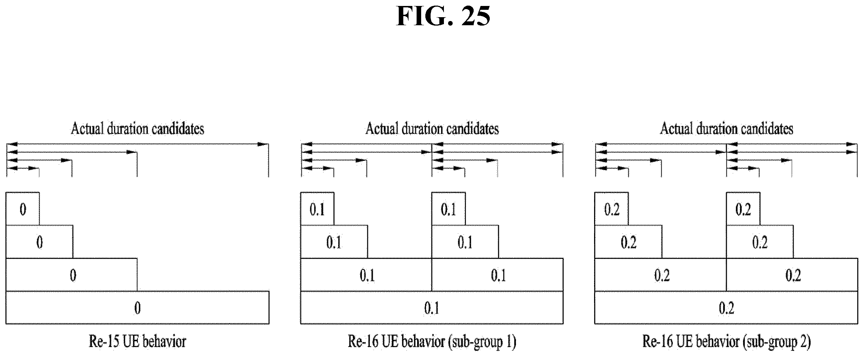

As a typical example of Method 4-1, an actual transmission duration in which a WUS can be transmitted may be used as shown in FIG. 24. In the example of the drawing, each numeral means an index of a WUS a UE intends to detect, '0' means a legacy WUS, and '1' and '2' mean WUSs corresponding to UE subgroup indexes, respectively. In case of a UE having no UE sub grouping capability (e.g., a legacy WUS capable UE expecting a Rel-15 NWUS (or MWUS)), an actual transmission duration may be always aligned with a position at which a maximum duration starts. On the other hand, in case of a UE subgrouping capable UE, a plurality of starting positions of an actual transmission duration may exist within a maximum duration. For example, as shown in the example of FIG. 25, in case of a UE subgrouping capable UE, a random starting point (e.g., a point corresponding to 1/2 of a maximum duration) within a maximum duration may be considered as an additional starting point of an actual transmission duration. In this case, the UE subgrouping capable UE may consider both of the starting point of the maximum duration and the additional starting point as available targets.

As a typical example of Method 6-1, initialization of a scrambling sequence used for the generation of an NWUS (or MWUS) may be performed with reference to a maximum duration starting position (i.e., a starting position of a first actual transmission duration within a maximum duration section). Through this, backward compatibility may be maintained according to a WUS transmission rule of a UE subgrouping incapable UE (e.g., a UE supportive of a legacy WUS (e.g., Rel-15 NWUS or MWUS)) and reduce complexity of a UE.

As a typical example of Method 4-1, initialization of a scrambling sequence used for the generation of an NWUS (or MWUS) may be performed with reference to a starting position of an actual transmission duration. Here, in case of a WUS transmission for which initialization has been performed already at a specific position, although a subsequent actual transmission duration position existing in the same maximum duration is met, a scrambling sequence may not be reinitialized. Through this, Namely, in case that a BS intends to provide information for a UE subgroup capable UE only and transmits a WUS using a starting point of an actual transmission duration except a starting point of a maximum duration, UEs having no UE subgrouping capability may be prevented from recognizing the transmission of a WUS.

[Method 4-2] Method of applying CDM and TDM sequentially according to the number of UE subgroups in case of using both CDM and TDM schemes

Method 4-2 proposes a method of determining a code/time domain resource applied to each UE subgroup according to the number of UE subgroups operated by a BS in case that both CDM and TDM schemes are usable to classify UE subgroup information. When the number of UE subgroups can be determined by a BS, the proposed method is usable for the purpose of enabling a UE and a BS to recognize it identically.

A specific method may include one of the following options.

(Option 4-2-1) CDM first subgroup allocation

When the number of UE subgroups that can be classified through CDM on the same time/frequency domain resource is $N_c$ and the number of UE subgroups configured by a BS is M, a TDM scheme using n time domain resources may be used for an integer n that meets the condition of $(n-1) \cdot Nc < M \leq n \cdot N_c$, and classification using a CDM scheme may be applied to each TDMed time domain resource in a manner that UE subgroups are dispersed as equally as possible. Specifically, when a size of n is defined on the above condition and an index of a UE subgroup to which a UE belongs is $M_i$, the UE may select a time domain resource of $(M_i \bmod n)^{th}$ index. For example, on the condition of $N_c \geq M$, UE subgrouping using a method of CDM only may be performed. In this case, all UE subgroups share the same time domain resource. In case of the condition of $N_c < M \leq 2N_c$, two time domain resources are used for the purpose of UE subgrouping. In this case, M/2 UE subgroups may be included in each time domain resource. Through this, the overhead due to a WUS can be reduced by minimizing a use of a time domain resource within classification capability of a code domain resource.

(Option 4-2-2) TDM first subgroup allocation

When the number of UE subgroups that can be classified through TDM is Nt and an index of a UE subgroup

is $M_i$, a UE may use a $(M_i \bmod N_t)^{th}$ time domain resource. Through this, the number of code domain resources configurable on each time domain resource simultaneously can be minimized.

In Method 4-2, FDM scheme is usable by the same principle instead of TDM scheme. In this case, the time domain resource in the above description may be applicable in a manner of being replaced by a frequency domain resource.

[Method 4-3] WUS generating method considering a presence or non-presence of a group common WUS if an overlapping occurs between WUSs of different UE subgroups in a TDM structure

In Method 4-3, a following method is proposed. Namely, a TDM scheme is used to classify a UE subgroup of a WUS. In doing so, if maximum durations of TDMed WUSs overlap each other in part, a WUS generation rule for the purpose of group common indication and a WUS generation rule for the purpose of UE subgroup indication are made different from each other. In case that TDM is used to classify a UE subgroup, it may happen that WUSs of different UE subgroups overlap each other due to the shortage of a time domain resource or for the purpose of restricting a WUS-to-PO gap size, etc.

As a typical example of Method 4-3, in case that a WUS classification scheme using TDM is used between UE subgroups, a WUS generation scheme of a WUS for the purpose of group common indication and a WUS generation scheme of a WUS for the UE subgroup specific purpose may be applied differently. This is generally applicable to a case that a plurality of UE subgroups are additionally classified by CDM in a single TDMed WUS transmission interval. In this case, a UE subgroup specific WUS can be classified on a code domain from another WUS overlapped on a time domain. In this case, a generation scheme of a scrambling sequence of a WUS may be independently determined for each UE subgroup, which may intend to expect different WUSs between different UE subgroups in a WUS overlapped subframe. For example, a scrambling sequence of a UE subgroup specific WUS may be generated by applying the proposed Method 1-1. On the other hand, in case of a WUS for the purpose of group common indication, all UE subgroups in the overlapped interval may expect the same reference WUS. Through this, in case of intending to give indication to all UE groups, a WUS transmission of a specific group may be prevented from being interrupted by a WUS of another UE group in the overlapped interval. For example, the proposed Method 2-3 or 2-4 may be used for a WUS for the purpose of group common indication. In this case, the reference WUS may include a legacy WUS to which UE subgrouping is not applied. Through this, a group common indication operation of a UE subgrouping incapable UE may not be interrupted by a UE subgrouping capable UE.

### CDM + FDM based UE subgrouping

For the purpose of UE subgrouping, a UE subgroup classification scheme using a WUS and a UE subgroup classification scheme using a frequency resource for transmitting a WUS may be used in combination. In the proposed method, each of different UEs expecting the same WUS may be classified through a WUS configured for its UE subgroup and a frequency domain resource on which a WUS is transmitted. The method proposed below is applicable to UE subgrouping through WUS classification.

[Method 5-1] Method of including UE subgrouping information using a WUS when a frequency resource used for mapping of a legacy WUS is divided and used for UE subgrouping

Method 5-1 proposes a method of including UE subgroup information in generating a WUS and using a partial region of a legacy WUS (or a UE subgrouping incapable WUS (i.e., a Not UE subgrouping capable WUS)) as a frequency resource for a WUS of a UE subgroup capable UE. In case that restriction on an available resource exists in aspect of CDM or FDM, the proposed method may be used to support more UE groups by combining them.

As a typical example of Method 5-1, a generation scheme of a WUS may be used in a manner of combining one or more of the methods proposed in <CDM based UE subgrouping>. In this case, the above-used WUS may include a WUS for the UE-subgroup purpose and a WUS for the common indicator purpose. The WUS for the common indicator purpose may be used to provide information to all WUS capable UEs, and may follow the generation scheme of a legacy WUS (e.g., Rel-15 MWUS that uses 2 PRBs). The WUS for the UE subgroup purpose may be classified from the legacy WUS. A same WUS may be usable between UE subgroups that use different PRBs, respectively. On the contrary, UE subgroup classification through a WUS is possible between different UE subgroups that use the same PRB.

As a typical example of Method 5-1, a position of a PRB used for transmission of a WUS may be determined through the method proposed in Method 3-2.

In Method 5-1, a UE may be designed to monitor both a UE subgroup specific WUS and a WUS for the common indication purpose at a position of a PRB corresponding to a UE subgroup.

**Selecting WUS multiplexing resource based on WUS parameters**

The inter-UE subgroup WUS multiplexing methods proposed above may have different advantages and disadvantages depending on situations. Hence, it is able to consider a method of defining various WUS multiplexing schemes on a system and allowing a BS to select and use a WUS available depending on a situation.

To this end, a BS may explicitly deliver a WUS resource to use actually among predefined available WUS resources to UEs through SIB or higher layer signaling such as RRC signaling. Through this, scheduling flexibility of a BS is guaranteed and a BS is able to select a WUS resource operation scheme suitable for a situation. On the contrary, since explicit information delivery is necessary, signaling overhead may be increased.

In order to decrease signaling overhead, a BS does not perform the explicitly information delivery but a UE is allowed to estimate WUS resource configuration implicitly using parameters supposed to be transmitted for other purposes. Particularly, WUS related parameters may become major factors for determining advantages and disadvantages of the WUS resource operation scheme and the respective WUS multiplexing schemes. Proposed in the following are methods of determining a WUS resource for the UE subgrouping purpose according to parameters related to a WUS using such property.

As a method of determining WUS resources to be used depending on WUS related parameters and differentiating WUS multiplexing schemes between UE subgroups through it, one or more of the below-proposed methods may be applicable in combination.

[Method 6-1] Method of determining a WUS resource to be used according to Rmax or a maximum duration of a WUS

Method 6-1 proposes a method that a WUS resource to be used is determined by a maximum duration of a WUS or a maximum repetition value (Rmax) of a paging NPDCCH. Specifically, one or more of the following options is applicable.

(Option 6-1-1) Method of determining a TDM scheme according to Rmax or a maximum duration of a WUS

In Option 6-1-1, the number of available time domain resources may be determined depending on Rmax or a maximum duration (hereinafter WUSmax) of a WUS. In case of a legacy WUS defined in the NB-IoT/MTC, repetition for the purpose of coverage extension or enhancement is applied, and repetition of bigger size is necessary to support a wider coverage. If a value of WUSmax is large, a wider coverage may be supported but a quantity of a necessary time domain resource is greatly increased as well. In addition, as the use of a time domain resource for a TDM scheme increases more, heavier network overhead is induced. Hence, an additional use of a time domain resource may not be appropriate for a large WUSmax value. Rmax is a value of determining a maximum repetition number of a paging. Generally, the larger the Rmax gets, the heavier the overhead for the paging becomes. Hence, the more a time domain resource for WUS multiplexing of a TDM scheme increases, the higher the probability of collision between a transmission position of a paging and a transmission position of a WUS becomes. In addition, since Rmax is a parameter directly used to determine WUSmax, a bigger value of Rmax may induce a larger WUSmax.

As a typical example to which Option 6-1-1 is applied, it is able to consider a method of dividing values of WUSmax (or Rmax) into several sections and then determining the number of time domain resources to be used according to each of the sections. For example, if a value of WUSmax (or Rmax) is equal to or greater than (or exceeds) a specific value, the number of time domain resource(s) used without application of TDM may be limited to 1. If the value of WUSmax (or Rmax) is smaller than (or equal to or smaller than) the specific value, two or more time domain resources to be used may be determined and a TDM scheme may be applied thereto.

(Option 6-1-2) Method of determining a CDM scheme according to Rmax or a maximum duration of a WUS

Option 6-1-2 may include a method of determining the number of available code domain resources according to Rmax or a maximum duration (hereinafter WUSmax) of a WUS. Generally, a power saving gain based on a WUS may be more important to UEs that need more satisfaction. In this case, if the number of UE subgroups is increased, an effect of a power saving gain can be raised by preventing an unnecessary wakeup operation of a UE. In addition, if a time domain resource, which is used when WUSmax or Rmax is large according to the application of Option 6-1-1, is reduced, a method for supplementing the number of insufficient UE subgroups may be necessary. In this case, since a time domain resource is limited according to a predetermined rule, a method of additionally selecting a relatively available code domain resource may be considered.

As a typical example of applying Option 6-1-2, it is able to consider a method of dividing values of WUSmax (or Rmax) into several sections and determining the number of code domain resources to use according to each section. For example, as a value of WUSmax (or Rmax) increases, the number of applied code domain resources may increase.

[Method 6-2] Method of determining a presence or non-presence of use of a specific time domain resource for a WUS according to a size of a WUS-to-PO gap

Method 6-2 proposes a method of determining a WUS resource on a time domain according to a gap size between a WUS and a PO. The proposed method is advantageous in controlling performance degradation, which may occur as a gap between a partial time domain resource and a PO is excessively increased in applying a TDM scheme, without separate signaling.

As a typical example of Method 6-2, in a system having a plurality of predetermined configurable time domain resources, a time domain resource of a WUS, of which WUS-to-PO gap size determined by WUS configuration parameters is equal to or greater than a specific value, may not be used. In this case, a gap between WUS and PO (i.e., a WUS-to-PO gap) may be calculated with reference to a starting subframe of the WUS or an ending subframe of the WUS. For example, in a system defined to configure two time domain WUS resources, one time domain WUS resource (hereinafter WUS2 resource) may be determined as a relative position for a starting subframe of the other time domain WUS resource (hereinafter WUS1 resource). Here, if a gap between the WUS2 resource and a PO is equal to or smaller than (or smaller than) a specific size, both of the WUS1 resource and the WUS2 resource may be usable. If the gap is greater than (or equal to or greater than) the specific size, the WUS 1 resource may be usable only.

If the WUS-to-PO gap is excessively increased, as a time for a UE to stand by until receiving a paging after acquiring a WUS becomes too long, unnecessary power consumption may occur. In addition, a latency, which is expected when paging information is delivered to an eNB from an MME, may be increased considerably. From this perspective, if a gap is limited to a size equal to or smaller than a predetermined size through Method 6-2, a gain can be obtained. In addition, separate signaling overhead is not caused by Method 6-2.

[Method 6-3] Method of determining a multiplexing scheme between UE subgroups according to UE's WUS capability

In Method 6-3, a multiplexing scheme between UE subgroups can be determined according to WUS capability of a UE. Typically, the WUS capability may include a WUS-to-PO gap size necessary for a UE. Through the proposed method, when WUS capability is a difference in implementation related to WUS detection and subsequent operations of a UE, selection of an appropriate multiplexing scheme is possible in consideration of UE's implementation features.

As a typical example of Method 6-3, it is able to consider a situation that there exist capability for a long gap having a relatively large value like gap capability for the eDRX purpose defined in the legacy NB-IoT/MTC and capability for a short gap having a relatively small value. In this case, the long gap capability may be defined by targeting receivers requiring relatively low complexity and low power consumption, but the short gap capability may be defined by targeting receivers requiring relatively high complexity and high power consumption. Here, in case of CDM applied multiplexing not for the purpose of classification of gap capability but for the purpose of UE subgrouping, a UE may need to simultaneously perform blind detection on a WUS for the group common indication purpose and a WUS for the purpose of UE subgroup specific indication. On the other hand, in case that only TDM (or FDM) is applied not for the purpose of classification of gap capability but for the purpose of UE subgrouping, there is a single WUS resource a UE should monitor and blind decoding may not be increased. Considering such property, only the multiplexing between UE subgroups using TDM (or FDM) is possible at a position of a gap for a long gap capable UE. In this case, classification of a UE subgroup of a CDM scheme may be supported. On the contrary, at a position of a gap for a short gap capable UE, a UE subgrouping operation using CDM may be allowed.

[Method 6-4] Method of determining how to operate a WUS resource depending on an extent that UE_ID is dispersed per PO

Method 6-4 proposes a method of determining how to operate a WUS resource depending on an extent that UE_ID is dispersed per PO. Here, the dispersed extent of UE_ID may be determined as a value estimated based on configuration information signaled by a BS for a paging related operation, and may be different from the number of UEs expecting a paging by accessing a corresponding cell actually. In this case, the configuration information for the paging related operation may include the number of paging carriers used in NB-IoT, information of weight given per paging carrier, DRX cycle of PO, the number of POs for different UE_ID groups existing in DRX cycle, etc. The above parameters may be used to estimate the maximum number of UE_ID estimated to expect a paging in one PO. For example, when a function of estimating a dispersed extent of UE_ID is defined and some of the above-described configuration informations are used as parameters of this function, the number of WUS resources to be used may be defined according to a result value of the function. The proposed method uses the dispersed extent of UE_ID as prior information, so it can somewhat predict and reflect the number of actually necessary WUS resources, thereby avoiding unnecessary waste of WUS resources advantageously.

[Method 6-5] Method of determining how to operate a WUS resource depending on an operation mode

Method 6-5 proposes a method of determining how to operate a WUS resource depending on an operation mode used in a system in which a plurality of operation modes exist like NB-IoT. Through this, when there exists a difference of the number of OFDM symbols used per subframe depending on an operation mode of NB-IoT, it may be able to use a performance difference attributed thereto. Typically, in case of an in-band operation mode, the number of OFDM symbols available in a single subframe is 11 and RE puncturing for securing transmission of CRS may be included. On the other hand, in case of a guard-band and standard operation mode, 14 OFDM symbols are available all and it is not affected by an RE puncturing caused by CRS. Hence, assuming that the same power is used in the guard band and standalone operation mode, WUS detection performance of a UE may be relatively good. By considering such property, it is able to consider a method of differentiating the number of code domain resources to be used per operation mode. For example, the number of code domain resources used for inter-UE subgroup multiplexing of a CDM scheme may be fixed, and the fixed number in the guard-band/standalone operation mode may be configured to be greater than that in the in-band operation mode.

[Method 6-6] WUS resource selection scheme in consideration of a case that a WUS parameter for a UE in eDRX state is optionally configurable

Method 6-6 proposes methods of determining whether to apply optional configuration depending on a presence or non-presence of DRX/eDRX of a UE and a gap size for a WUS parameter. In the proposed method, if UE subgrouping for a WUS is applied, at least one WUS parameter configuration for UE subgrouping applied UEs should be configured. In addition, considered is a structure capable of establishing configuration of an additional WUS parameter in optional form depending on a selection made by a BS. In the following description, for clarity, one WUS parameter configuration guaranteed at least is defined as WUS-Con-A and an additionally configurable WUS parameter configuration is defined as WUS-Con-B. If two additionally configurable WUS parameter configurations exist, they are classified and represented as WUS-Con-B 1 and WUS-Con-B2, respectively and combined together to be referred to as WUS-Con-B representatively.

A specific method proposed in Method 6-6 may be used in a manner of combining one or more of the following options. If one or more methods that can be supported by a BS exist, the BS may select one method and inform a UE of the selected method.

(Option 6-6-0)

A WUS parameter to which Method 6-6 is applied may be determined by a time-frequency resource of a WUS and/or the number of UE subgroups. Here, the time-frequency resource of the WUS may include whether TDM or FDM is applied.

(Option 6-6-1)

As a specific method to which Method 6-6 is applied, Option-6-6-1 considers a method that WUS-Con-B is applied to a UE in eDRX state only. Here, WUS-Con-A may be applied to a UE in DRX state. If WUS-Con-A exists only but WUS-Con-B is not configured, all UEs to which UE subgrouping is applied may operate with reference to the WUS-Con-A.

In Option 6-6-1, if a WUS-to-PO gap size for DRX and a WUS-to-PO gap size for an eDRX short gap are configured equal to each other, WUS-Con-A is applicable to UE subgrouping applied UEs that use an eDRX short gap irrespective of a presence or non-presence of WUS-Con-B. In this case, if WUS-Con-B exists, it can be applied to the UEs that use the eDRX long gap.

Through the method proposed by Option 6-6-1, UEs that use the same WUS-to-PO gap are configured to expect the same WUS irrespective of a presence or non-presence of DRX/eDRX, and it may be able to prevent a WUS overlapping problem that different WUSs are transmitted on the same WUS resources.

(Option 6-6-2)

In Option 6-6-2 as a specific method to which Method 6-6 is applied, WUS-Con-B is applicable to a UE in eDRX state only. In this case, WUS-Con-A may be applied to a UE in DRX state. If WUS-Con-A exists only but WUS-Con-B is not configured, all UEs to which UE subgrouping is applied may operate with reference to the WUS-Con-A.

In Option 6-6-2, if WUS-Con-B is configured, an eDRX UE may operate with reference to the WUS-Con-B all the time. In this case, although a WUS-to-PO gap size for DRX and a WUS-to-PO gap size for an eDRX short gap are configured equal to each other, a UE that uses the eDRX short gap operates with reference to the WUS-Con-B. If a BS intends to handle a UE in DRX state and a UE in eDRX short gap state equally, it may not configure WUS-Con-B.

Through the method proposed in Option 6-6-2, a BS may support additional optimization for a UE for an eDRX short gap.

(Option 6-6-3)

In Option 6-6-3 as a specific method to which Method 6-6 is applied, WUS-Con-B is applicable to a UE in eDRX state only. In this case, regarding the WUS-Con-B, WUS-Con-B 1 for an eDRX short gap and WUS-Con-B2 for an eDRX long gap may be configured independently.

In the method of Option 6-6-3, if WUS-Con-A is configured only but WUS-Con-B 1 and WUS-Con-B2 fail to exist, all UEs performing UE subgrouping may operate with reference to the WUS-Con-A. If WUS-Con-A and WUS-Con-B 1 are configured and WUS-Con-B2 fails to be configured, a UE in DRX state may operate with reference to the WUS-Con-A and UEs in eDRX state may operate with reference to the WUS-Con-B 1. If WUS-Con-A and WUS-Con-B2 are configured and WUS-Con-B 1 fails to be configured, a UE in DRX state and a UE in eDRX short gap state may operate with reference to the WUS-Con-A and a UE in eDRX long state may operate with reference to the WUS-Con-B. If WUS-Con-A, WUS-Con-B 1 and WUS-Con-B2 are configured all, a UE in DRX state, a UE in eDRX short gap state and a UE in DRX long gap state may operate with reference to the WUS-Con-A, the WUS-Con-B1 and the WUS-Con-B2, respectively.

Through the method of Option 6-6-3, it is able to obtain a gain of raising network flexibility because WUS parameters for an eDRX shot gap and an eDRX long gap can be configured independently. Simultaneously, even if some WUS parameters are configured only, it is advantageous in that a UE can determine a WUS parameter that becomes a reference of UE subgrouping.

(Option 6-6-4)

In Option 6-6-4 as a specific method to which Method 6-6 is applied, WUS-Con-B2 is applied to a UE in eDRX long gap state only and a WUS parameter of the WUS-Con-B2 may be determined by configuration of another WUS parameter (e.g., WUS-Con-A or WUS-Con-B1). Here, if an eDRX long gap is not configured in a corresponding cell, WUS-Con-B2 is not configured.

In the method of Option 6-6-4, only if a BS supports an eDRX long gap configurable optionally, WUS-Con-B2 is configured and a UE in eDRX long gap state may operate with reference to the WUS-Con-B2. In this case, the WUS-Con-B2 may not be applied to a UE in DRX state and UEs in eDRX short gap state. The UEs in eDRX short gap state may follow WUS-Con-B 1 in case of a presence of the WUS-Con-B 1. If WUS-Con-B 1 fails to exist, the UEs may follow WUS-Con-A.

In the method of Option 6-6-4, WUS-Con-B2 may be determined as a subset of a WUS parameter configured in WUS-Con-A. For one example, if WUS-Con-B 1 fails to exist and two TDMed WUS resources are configured in WUS-Con-A, WUS-Con-B2 may follow the rest of WUS parameters in the WUS-Con-A except TDM (i.e., select a single time domain WUS resource only) identically. For another example, if WUS-Con-B 1 is configured to have two TDMed WUS resources, WUS-Con-B2 may follow the rest of WUS parameters in the WUS-Con-A except TDM (i.e., select a single time domain WUS resource only) identically. In the above examples, if a single time domain WUS resource is configured in WUS-Con-A or WUS-Con-B1 only (i.e., a WUS resource of a TDM scheme is not configured), information of WUS-Con-B2 may be set identical to the WUS-Con-A or the WUS-Con-B 1.

If such a method is applied, since information of WUS-Con-B can be represented in a manner of sharing signaling information of WUS-Con-A, singling overhead can be reduced. In addition, in case of an eDRX long gap, since a size of a gap between a WUS and a PO (i.e., a WUS-to-PO gap) is large, additional application of TDM may be inappropriate, whereby Option 6-6-4 is available. In addition, it may be intended to prevent the increase of a paging delay due to addition of a WUS resource through Option 6-6-4.

## Example of communication system to which the present disclosure is applied

Various descriptions, function, procedures, proposals, methods and/or operation flowcharts disclosed in the present document are applicable to various fields that require device-to-device wireless communication/connection, by which the present disclosure is non-limited.

The following is exampled in detail with reference to the drawing. The same reference numbers in the following drawing/description may refer to the same or corresponding hardware, software or function blocks.

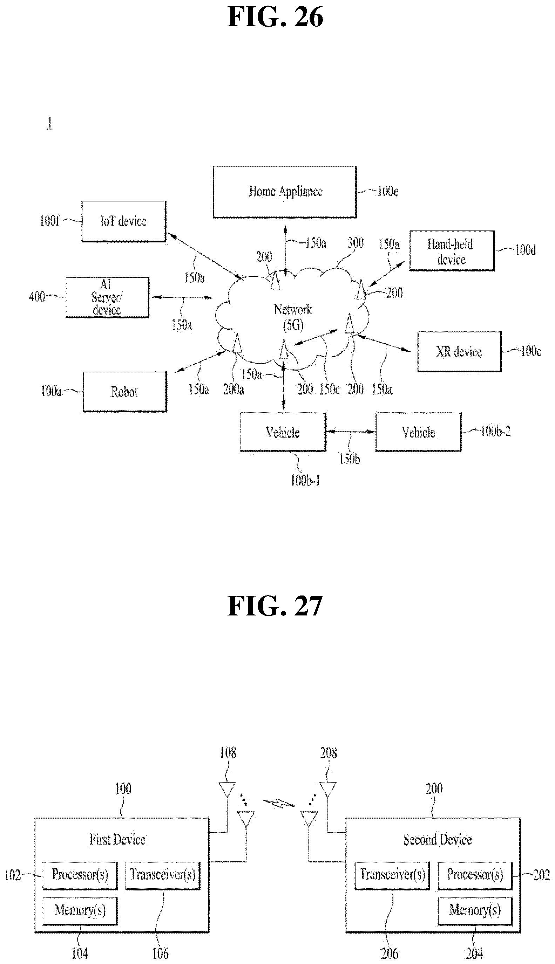

FIG. 26 illustrates a communication system 1 applied to the present disclosure.

Referring to FIG. 26, the communication system 1 applied to the present disclosure includes wireless devices, BSs, and a network. The wireless devices refer to devices performing communication by radio access technology (RAT) (e.g., 5G New RAT (NR) or LTE), which may also be called communication/radio/5G devices. The wireless devices may include, but no limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle equipped with a wireless communication function, an autonomous driving vehicle, and a vehicle capable of performing vehicle-to-vehicle (V2V) communication. The vehicles may include an unmanned aerial vehicle (UAV) (e.g., a drone). The XR device may include an augmented reality (AR)/virtual reality (VR)/mixed reality (MR) device, and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smart glasses), and a computer (e.g., a laptop). The home appliance may include a TV, a refrigerator, and a washing machine. The IoT device may include a sensor and a smart meter. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured by using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f and the BSs 200, or between the BSs 200. Herein, the wireless communication/connections may be established through various RATs (e.g., 5G NR) such as UL/DL communication 150a, sidelink communication 150b (or, D2D communication), or inter-BS communication 150c (e.g. relay, integrated access backhaul (IAB)). A wireless device and a BS/a wireless devices, and BSs may transmit/receive radio signals to/from each other through the wireless communication/connections 150a, 150b, and 150c. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device to which the present disclosure is applied

FIG. 27 illustrates a wireless device applicable to the present invention.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present invention, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present invention, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Utilization examples of wireless devices to which the present invention is applied**

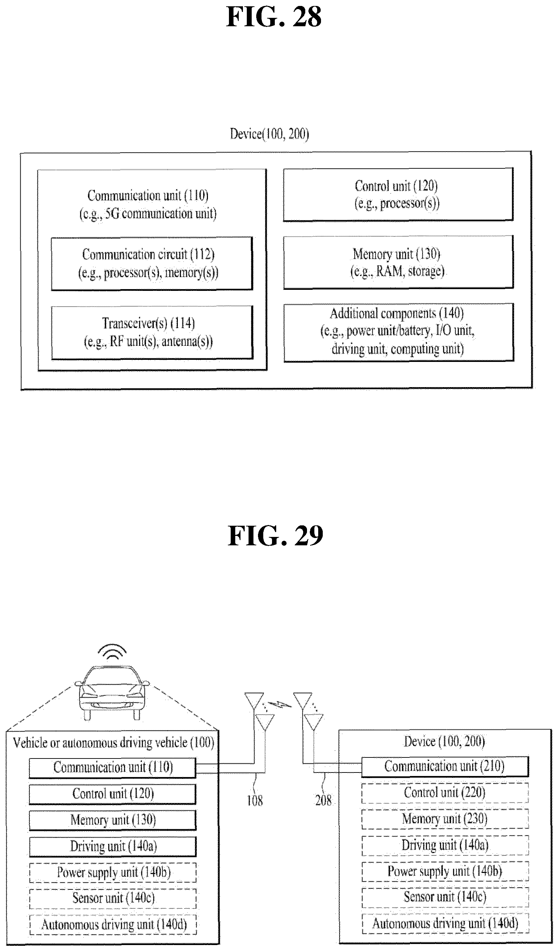

FIG. 28 illustrates another example of a wireless device applied to the present invention. The wireless device may be implemented in various forms according to a use-case/service (refer to FIG. 22).

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM), a flash memory, a volatile memory, a non-volatile memory, and/or a combination thereof.

**Examples of vehicles or autonomous vehicles to which the present invention is applied**

FIG. 29 illustrates a vehicle or an autonomous driving vehicle applied to the present invention. The vehicle or autonomous driving vehicle may be implemented by a mobile robot, a car, a train, a manned/unmanned Aerial Vehicle (AV), a ship, etc.

Referring to FIG. 29, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

## INDUSTRIAL APPLICABILITY

The above-described embodiments of the present disclosure are applicable to various mobile communication systems.

## Claims

1. A method of receiving a signal by a user equipment, UE, (100) in a wireless communication system, the method comprising:

   receiving (S1101) a Wake-Up Signal, WUS, based on a same antenna port assumption; and
   monitoring (S1103) a paging signal in one or more Paging Occasions, POs, based on the WUS,
   **characterized in that**
   the same antenna port assumption for the WUS reception (S11 01) is related to a pair of subframes for the WUS, each subframe being a time interval and
   the UE (100) determines that a same antenna port is used in different subframes for the WUS, based on that the different subframes belong to a same subframe pair 'm', the subframe pair 'm' including a subframe #k+2m and a subframe #k+2m+1, where 'm' is an integer $\geq 0$, and 'k' denotes an index of a subframe where transmission of the WUS starts.

2. The method of claim 1, wherein determining that the same antenna port is used in the different subframes for the WUS, comprises:
   determining that a WUS antenna port used for a subframe #k+1 is the same as a WUS antenna port used for a subframe #k in which the transmission of the WUS starts.

3. The method of claim 1,

   wherein the same antenna port assumption is used by a first subgroup of devices including the UE (100), and
   wherein the one or more POs are configured for one group including the first subgroup of devices.

4. The method of claim 1, wherein the subframe #k+2m and the subframe #k+2m+1 are consecutive subframes.

5. The method of claim 1, wherein the UE (100) is configured with multiple antenna ports for the WUS.

6. The method of claim 1, wherein an antenna port used for the WUS is not changed at least during a single subframe.

7. A user equipment (100), UE, for wireless communication, the UE (100) comprising:

at least one processor (102);
a transceiver (106) configured to transmit or receive wireless signals under control of the at least one processor (102) and
at least one memory (104) connected to the at least one processor (102) operatively and storing instructions instructing the at least one processor (102) to perform specific operations if executed,
wherein the specific operations comprises:

an operation for receiving (S1101) a Wake-Up Signal, WUS, based on a same antenna port assumption and an operation for monitoring (S1103) a paging signal in one or more Paging Occasions, POs, based on the WUS,
**characterized in that**
the same antenna port assumption for the WUS reception (S1101) is related to a pair of subframes for the WUS, each subframe being a time interval, and
the same antenna port assumption is that a same antenna port is used in different subframes for the WUS, based on that the different subframes belong to a same subframe pair 'm', the subframe pair 'm' including a subframe #k+2m and a subframe #k+2m+1, where 'm' is an integer $\geq 0$, and 'k' denotes an index of a subframe where transmission of the WUS starts.

8. A medium (104) configured to store program codes for performing the method according to any one of claims 1 to 6.

9. A method of transmitting a signal by a base station, BS, (200), the method comprising:

transmitting (S1101) a Wake-Up Signal, WUS, through antenna ports for the WUS based on a pair of subframes for the WUS, each subframe being a time interval; and
transmitting (S1103) a paging signal based on one or more Paging Occasions, POs, associated with the WUS,
**characterized in that**
based on that different subframes belong to a same subframe pair 'm', the BS (200) transmits the WUS through a same antenna port for the different subframes among the antenna ports for the WUS, the subframe pair 'm' including a subframe #k+2m and a subframe #k+2m+1, where 'm' is an integer $\geq 0$, and 'k' denotes an index of a subframe where transmission of the WUS starts.

10. A base station, BS, (200) comprising:

a transceiver (206); and
a processor (202) configured control the transceiver (206) to
transmit (S1101) a Wake-Up Signal, WUS, through antenna ports for the WUS based on a pair of subframes for the WUS, each subframe being a time interval; and
transmit (S1102) a paging signal based on one or more Paging Occasions, POs, associated with the WUS,
**characterized in that**
based on that different subframes belong to a same subframe pair 'm', the processor (202) determines to transmit the WUS through a same antenna port for the different subframes among the antenna ports for the WUS, the subframe pair 'm' including a subframe #k+2m and a subframe #k+2m+1, where 'm' is an integer $\geq$ 0, and 'k' denotes an index of a subframe where transmission of the WUS starts.

**Patentansprüche**

1. Verfahren zum Empfangen eines Signals durch ein Benutzergerät (UE) (100) in einem Drahtloskommunikationssystem, wobei das Verfahren Folgendes umfasst:

Empfangen (S1101) eines Wake-Up-Signals (WUS), basierend auf der Annahme eines gleichen Antennenanschlusses; und

Überwachen (S1103) eines Funkrufsignals in einem oder mehreren Funkrufanlässen (POs), basierend auf dem WUS,

**dadurch gekennzeichnet, dass**

die Annahme desselben Antennenanschlusses für den WUS-Empfang (S1101) sich auf ein Paar von Subframes für das WUS bezieht, wobei jeder Subframe ein Zeitintervall ist und das UE (100) feststellt, dass ein gleicher Antennenanschluss in verschiedenen Subframes für das WUS verwendet wird, basierend darauf, dass die verschiedenen Subframes zu einem gleichen Subframe-Paar "m" gehören, wobei das Subframe-Paar "m" einen Subframe #k+2m und einen Subframe #k+2m+1 umfasst, wobei "m" eine ganze Zahl $\geq 0$ ist und "k" einen Index eines Subframes bezeichnet, in dem die Übertragung des WUS beginnt.

2. Verfahren nach Anspruch 1, wobei die Bestimmung, dass derselbe Antennenanschluss in den verschiedenen Subframes für das WUS verwendet wird, Folgendes umfasst:

Feststellen, dass ein WUS-Antennenanschluss, der für einen Subframe #k+1 verwendet wird, der gleiche ist wie ein WUS-Antennenanschluss, der für einen Subframe #k verwendet wird, in dem die Übertragung des WUS beginnt.

3. Verfahren nach Anspruch 1, wobei dieselbe Antennenanschluss-Annahme von einer ersten Untergruppe von Geräten einschließlich des UE (100) verwendet wird, und

wobei der eine oder die mehreren POs für eine Gruppe konfiguriert sind, die die erste Untergruppe von Geräten umfasst.

4. Verfahren nach Anspruch 1, wobei der Subframe #k+2m und der Subframe #k+2m+1 aufeinanderfolgende Subframes sind.

5. Verfahren nach Anspruch 1, wobei das UE (100) mit mehreren Antennenanschlüssen für das WUS konfiguriert ist.

6. Verfahren nach Anspruch 1, wobei ein für das WUS verwendeter Antennenanschluss zumindest während eines einzelnen Subframes nicht gewechselt wird.

7. Benutzergerät (100) (UE) für Drahtloskommunikation, wobei das UE (100) Folgendes umfasst:

mindestens einen Prozessor (102);

einen Transceiver (106), der so ausgebildet ist, dass er unter der Steuerung des mindestens einen Prozessors (102) Funksignale sendet oder empfängt, und

mindestens einen Speicher (104), der operativ mit dem mindestens einen Prozessor (102) verbunden ist und Befehle speichert, die den mindestens einen Prozessor (102) anweisen, spezifische Operationen durchzuführen, wenn sie ausgeführt werden,

wobei die spezifischen Operationen Folgendes umfassen:

eine Operation zum Empfangen (S1101) eines Wake-Up-Signals (WUS), basierend auf der Annahme eines gleichen Antennenanschlusses, und

eine Operation zum Überwachen (S1103) eines Funkrufsignals in einem oder mehreren Funkrufanlässen (POs) auf der Grundlage des WUS,

**dadurch gekennzeichnet, dass**

die Annahme desselben Antennenanschlusses für den WUS-Empfang (S1101) auf ein Paar von Subframes für das WUS bezogen ist, wobei jeder Subframe ein Zeitintervall ist, und

die Annahme desselben Antennenanschlusses darin besteht, dass ein und derselbe Antennenanschluss in verschiedenen Subframes für das WUS verwendet wird, wobei die verschiedenen Subframes zu demselben Subframe-Paar "m" gehören, wobei das Subframe-Paar "m" einen Subframe #k+2m und einen Subframe #k+2m+1 umfasst, wobei "m" eine ganze Zahl $\geq 0$ ist und "k" einen Index eines Subframes bezeichnet, in dem die Übertragung des WUS beginnt.

8. Medium (104), das so ausgebildet ist, dass es Programmcodes zur Durchführung des Verfahrens nach einem der Ansprüche 1 bis 6 speichert.

**9.** Verfahren zur Übertragung eines Signals durch eine Basisstation (BS) (200), wobei das Verfahren Folgendes umfasst:

Senden (S1101) eines Wake-Up-Signals (WUS) über Antennenanschlüsse für das WUS auf der Grundlage eines Paars von Subframes für das WUS, wobei jeder Subframe ein Zeitintervall ist; und
Senden (S1103) eines Funkrufsignals auf der Grundlage eines oder mehrerer Funkrufanlässe (Paging Occasions, POs), die mit dem WUS verbunden sind,
**dadurch gekennzeichnet, dass**
auf der Grundlage, dass verschiedene Subframes zu einem gleichen Subframe-Paar "m" gehören, die BS (200) das WUS über einen gleichen Antennenanschluss für die verschiedenen Subframes unter den Antennenanschlüssen für das WUS überträgt, wobei das Subframe-Paar "m" einen Subframe #k+2m und einen Subframe #k+2m+1 umfasst, wobei "m" eine ganze Zahl $\geq 0$ ist und "k" einen Index eines Subframes bezeichnet, in dem die Übertragung des WUS beginnt.

**10.** Basisstation (BS) (200), die Folgendes umfasst:

einen Transceiver (206); und
einen Prozessor (202), der so ausgebildet ist, dass er den Transceiver (206) so steuert, dass er ein Wake-Up-Signal (WUS) über Antennenanschlüsse für das WUS auf der Grundlage eines Paars von Subframes für das WUS sendet (S1101), wobei jeder Subframe ein Zeitintervall ist; und
Senden (S1102) eines Funkrufsignals auf der Grundlage eines oder mehrerer Funkrufanlässe (POs), die dem WUS zugeordnet sind,
**dadurch gekennzeichnet, dass**
auf der Grundlage, dass verschiedene Subframes zu einem gleichen Subframe-Paar "m" gehören, der Prozessor (202) bestimmt, das WUS über einen gleichen Antennenanschluss für die verschiedenen Subframes unter den Antennenanschlüssen für das WUS zu übertragen, wobei das Subframe-Paar "m" einen Subframe #k+2m und einen Subframe #k+2m+1 umfasst, wobei "m" eine ganze Zahl $\geq 0$ ist und "k" einen Index eines Subframes bezeichnet, in dem die Übertragung des WUS beginnt.

## Revendications

**1.** Procédé de réception d'un signal par un équipement utilisateur, UE, (100) dans un système de communication sans fil, le procédé comprenant les étapes suivantes :

recevoir (S1101) un signal de réveil, WUS, basé sur une hypothèse de même port d'antenne ; et
surveiller (S1103) un signal de radiomessagerie dans une ou plusieurs occasions de radiomessagerie, PO, sur la base du WUS, **caractérisé en ce que** :

l'hypothèse d'un même port d'antenne pour la réception du WUS (S1101) est liée à une paire de sous-trames pour le WUS, chaque sous-trame étant un intervalle de temps, et
l'UE (100) détermine qu'un même port d'antenne est utilisé dans différentes sous-trames pour le WUS, sur la base du fait que les différentes sous-trames appartiennent à une même paire de sous-trames « m », la paire de sous-trames « m » comprenant une sous-trame #k+2m et une sous-trame #k+2m+1, où « m » est un entier $\geq 0$, et « k » désigne un index d'une sous-trame dans laquelle commence la transmission du WUS.

**2.** Procédé selon la revendication 1, dans lequel la détermination que le même port d'antenne est utilisé dans les différentes sous-trames pour le WUS, comprend l'étape suivante :

déterminer qu'un port d'antenne WUS utilisé pour une sous-trame #k+1 est le même qu'un port d'antenne WUS utilisé pour une sous-trame #k dans laquelle la transmission du WUS commence.

**3.** Procédé selon la revendication 1,

dans lequel la même hypothèse de port d'antenne est utilisée par un premier sous-groupe de dispositifs comprenant l'UE (100), et
dans lequel les une ou plusieurs PO sont configurées pour un groupe comprenant le premier sous-groupe de dispositifs.

**4.** Procédé selon la revendication 1, dans lequel la sous-trame #k+2m et la sous-trame #k+2m+1 sont des sous-trames consécutives.

**5.** Procédé selon la revendication 1, dans lequel l'UE (100) est configuré avec plusieurs ports d'antenne pour le WUS.

**6.** Procédé selon la revendication 1, dans lequel un port d'antenne utilisé pour le WUS n'est pas changé au moins pendant une sous-trame unique.

**7.** Equipement utilisateur (100), UE, pour la communication sans fil, l'UE (100) comprenant :

au moins un processeur (102) ;
un émetteur-récepteur (106) configuré pour émettre ou
recevoir des signaux sans fil sous le contrôle de l'au moins un processeur (102), et
au moins une mémoire (104) connectée à l'au moins un processeur (102) de manière opérationnelle et stockant des instructions donnant pour instruction à l'au moins un processeur (102) d'effectuer des opérations spécifiques si elles sont exécutées, où les opérations spécifiques comprennent :
une opération pour recevoir (S1101) un signal de réveil, WUS, basé sur une hypothèse de même port d'antenne, et une opération pour surveiller (S1103) un signal de radiomessagerie dans une ou plusieurs occasions de radiomessagerie, PO, sur la base du WUS,
**caractérisé en ce que** :

l'hypothèse d'un même port d'antenne pour la réception du WUS (S1101) est liée à une paire de sous-trames pour le WUS, chaque sous-trame étant un intervalle de temps, et
l'hypothèse d'un même port d'antenne est qu'un même port d'antenne est utilisé dans différentes sous-trames pour le WUS, sur la base du fait que les différentes sous-trames appartiennent à une même paire de sous-trames « m », la paire de sous-trames « m » comprenant une sous-trame #k+2m et une sous-trame #k+2m+1, où « m » est un entier ≥ 0, et « k » désigne un index d'une sous-trame dans laquelle commence la transmission du WUS.

**8.** Support (104) configuré pour stocker des codes de programme pour la mise en œuvre du procédé selon l'une quelconque des revendications 1 à 6.

**9.** Procédé d'émission d'un signal par une station de base, BS, (200), le procédé comprenant les étapes suivantes :

émettre (S1101) un signal de réveil, WUS, par des ports d'antenne pour le WUS sur la base d'une paire de sous-trames pour le WUS, chaque sous-trame étant un intervalle de temps ; et
transmettre (S1103) un signal de radiomessagerie sur la base d'une ou plusieurs occasions de radiomessagerie, PO, associées au WUS,
**caractérisé en ce que** :
sur la base du fait que différentes sous-trames appartiennent à une même paire de sous-trames « m », la BS (200) transmet le WUS par un même port d'antenne pour les différentes sous-trames parmi les ports d'antenne pour le WUS, la paire de sous-trames « m » comprenant une sous-trame #k+2m et une sous-trame #k+2m+1, où « m » est un entier ≥ 0, et « k » désigne un index d'une sous-trame dans laquelle commence la transmission du WUS.

**10.** Station de base, BS, (200) comprenant :

un émetteur-récepteur (206) ; et
un processeur (202) configuré pour commander l'émetteur-récepteur (206) pour :

transmettre (S1101) un signal de réveil, WUS, à travers des ports d'antenne pour le WUS sur la base d'une paire de sous-trames pour le WUS, chaque sous-trame étant un intervalle de temps ; et
transmettre (S1102) un signal de radiomessagerie sur la base d'une ou plusieurs occasions de radiomessagerie, PO, associées au WUS,

**caractérisé en ce que** :
sur la base du fait que différentes sous-trames appartiennent à une même paire de sous-trames « m », le processeur (202) détermine de transmettre le WUS par un même port d'antenne pour les différentes sous-trames parmi les ports d'antenne pour le WUS, la paire de sous-trames « m » comprenant une sous-trame #k+2m et une sous-trame #k+2m+1, où « m » est un entier $\geq$ 0, et « k » désigne un index d'une sous-trame dans laquelle commence la transmission du WUS.

# FIG. 1

Initial Cell Search — System Information Reception — Random Access Procedure — General DL/UL Tx/Rx S18

P/S - SCH & [DLRS] & PBCH — S11

PDCCH/ PDSCH (BCCH) — S12

PRACH — S13

PDCCH/ PDSCH — S14

PRACH — S15

PDCCH/ PDSCH — S16

PDCCH/ PDSCH — PUSCH/ PUCCH — S17

• DL/UL ACK/NACK
• UE CQI/PMI/Rank Report using PUSCH and PUCCH

# FIG. 2

Radio frame

Slot

| #0 | #1 | #2 | ... | #18 | #19 |
|----|----|----|-----|-----|-----|

Sub-frame

( a )

One radio frame, $T_S = 307200T = 10ms$

One half-frame, $T_S = 153600T = 5ms$

One slot
$T_{slot} = 15360T_S$

$30720T_S$

| Subframe#0 | | | | Subframe#2 | Subframe3 | Subframe#4 | Subframe#5 | | | | Subframe#7 | Subframe#8 |

One subframe,
$30720T_S$

DwPTS    GP    UpPTS

DwPTS    GP    UpPTS

( b )

# FIG. 3

7 symbols

$N^{DL} \times 12$ Subcarriers

12 Subcarriers

Resource Block
$12 \times 7$

Resource Element

# FIG. 4

# FIG. 5

RB
(503)

Frequency

Time

Slot
(501)

Subframe
(500)

Symbol
(502)

Subframe
(505)

Data region (504)

Subframe
(505)

▨ : SRS transmission region (506)

▨ : DMRS transmission region

☐ : RB pair

# FIG. 6

# FIG. 7

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

| | Slot (14 symbols) |
|---|---|
| 15KHz | |

1ms

| | Slot 0 (14 symbols) | Slot 1 |
|---|---|---|
| 30KHz | | |

500us

| | Slot 0 (14 symbols) | Slot 1 | Slot 2 | Slot 3 |
|---|---|---|---|---|
| 60KHz | | | | |

250us

| | Slot 0 (14 symbols) | Slot 1 | Slot 2 | Slot 3 | Slot 4 | Slot 5 | Slot 6 | Slot 7 |
|---|---|---|---|---|---|---|---|---|
| 120KHz | | | | | | | | |

125us

# FIG. 8

# FIG. 9

DL only

UL only

UL contril

Mixed UL-DL

DL contril

slot

DL    UL

# FIG. 10

DC subcarrier                                           180kHz

10MHz BW, | 18 | 19 | 20 | 21 | 22 | 23 | 24 | 25 | 26 | 27 | 28 | 29 | 30 | 31
50 PRBs

97.5kHz        900kHz

# FIG. 11

# FIG. 12

# FIG. 13

# FIG. 14

# FIG. 15

(a)   #n   0   1   2   3   4   5   6

      #m   0   1   1   2   2   3   3

(b)   #n   0   1   2   3   4   5   6   7

      #m   0   0   0   0   1   1   1   1

(c)   #n   0   1   2   3   4   5   6   7

      #m   0   0   0   0   1   1   1   1

# FIG. 16

UE can assume 2 subframes are
transmitted on the same antenna port

UE cannot assume 2 set of subframes are
transmitted on the same antenna port

WUS signal

Cover code

SF

• • •

# FIG. 17

```
┌─────────────────────────────────────────────┐
│            Receiving WUS based on            │──S1101
│ a structure of antenna port assumption for a sub-group │
└─────────────────────────────────────────────┘
                      │
                      ▼
┌─────────────────────────────────────────────┐
│    Monitoring a paging signal on one or more POs    │──S1103
│                based on WUS                  │
└─────────────────────────────────────────────┘
```

# FIG. 18

# FIG. 19

# FIG. 20

# FIG. 21

# FIG. 22

# FIG. 23

# FIG. 24

**FIG. 25**

Actual duration candidates

| 0 |
| 0 |
| 0 |
| 0 |

Re-15 UE behavior

Actual duration candidates

| 0.1 | | 0.1 | |
| 0.1 | | 0.1 | |
| 0.1 | 0.1 | | |
| 0.1 | | | |

Re-16 UE behavior (sub-group 1)

Actual duration candidates

| 0.2 | | 0.2 | |
| 0.2 | | 0.2 | |
| 0.2 | 0.2 | | |
| 0.2 | | | |

Re-16 UE behavior (sub-group 2)

EP 3 813 442 B1

EP 3 813 442 B1

# FIG. 26

1

# FIG. 27

67

# FIG. 28

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 29

| Vehicle or autonomous driving vehicle (100) | | Device (100, 200) |
|---|---|---|
| Communication unit (110) | | Communication unit (210) |
| Control unit (120) | 108 | Control unit (220) |
| Memory unit (130) | 208 | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Detailed design for Wake-up signal sequence. **QUALCOMM INCORPORATED.** 3GPP DRAFT; R1-1807109 WUS SEQUENCE, 3RD GENERATION PARTNERSHIP PROJECT (3GPP). MOBILE COMPETENCE CENTRE, 20 May 2018, vol. RAN WG1

- Wake Up Signal Design. **SAMSUNG.** GPP DRAFT; R1-1804331 NB-lOT WAKE UP SIGNAL DESIGN, 3RD GENERATION PARTNERSHIP PROJECT (3GPP). MOBILE COMPETENCE CENTRE, 06 April 2018, vol. RAN WG1
- Feature lead summary on detailed design of Wake-up signal in NB-IoT. **HUAWEI et al.** 3GPP DRAFT; R1-1803006, 3RD GENERATION PARTNERSHIP PROJECT (3GPP). MOBILE COMPETENCE CENTRE, 28 February 2018, vol. RAN WG1